# EUROPÄISCHE PATENTSCHRIFT

(11) **EP 1 091 995 B1**
(45) Veröffentlichungstag und Bekanntmachung des Hinweises auf die Patenterteilung: **01.12.2004**
(21) Anmeldenummer: 99929297.2
(22) Anmeldetag: 22.06.1999
(51) Int. Cl.: C08G 67/02

(54) **KATALYSATORSYSTEME AUF DER BASIS VON ÜBERGANGSMETALLKOMPLEXEN FÜR DIE KOHLENMONOXIDCOPOLYMERISATION IN EINEM WÄSSRIGEN MEDIUM**
CATALYST SYSTEMS ON THE BASIS OF TRANSITION METAL COMPLEXES FOR CARBON MONOXIDE COPOLYMERISATION IN AN AQUEOUS MEDIUM
SYSTEMES CATALYSEURS A BASE DE COMPLEXES DE METAUX DE TRANSITION POUR LA COPOLYMERISATION DE MONOXYDE DE CARBONE DANS UNE SUBSTANCE AQUEUSE

(30) Priorität: 02.07.1998 DE 19829520
(43) Veröffentlichungstag der Anmeldung: 18.04.2001
(73) Patentinhaber: BASF AKTIENGESELLSCHAFT, 67056 Ludwigshafen (DE)
(72) Erfinder: QUEISSER, Joachim, D-68165 Mannheim (DE); SLANY, Michael, D-67281 Kirchheim (DE); GEPRÄGS, Michael, D-67245 Lambsheim (DE); LINDNER, Ekkehard, D-72076 Tübingen (DE); SCHMID, Markus, D-72793 Pfullingen (DE); WALD, Joachim, D-72458 Albstadt-Ebingen (DE); WEGNER, Peter, D-72070 Tübingen (DE)
(86) Internationale Anmeldenummer: PCT/EP1999/004311
(87) Internationale Veröffentlichungsnummer: WO 2000/001756

(56) Entgegenhaltungen:
- EP-A- 0 357 101
- EP-A- 0 792 902
- US-A- 5 171 832
- JIANG Z ET AL: "WATER-SOLUBLE PALLADIUM(II) COMPOUNDS AS CATALYSTS FOR THE ALTERNATING COPOLYMERIZATION OF OLEFINS WITH CARBON MONOXIDE IN AN AQUEOUS MEDIUM" MACROMOLECULES, Bd. 27, Nr. 24, 21. November 1994 (1994-11-21), Seite 7215/7216 XP000480232 ISSN: 0024-9297 in der Anmeldung erwähnt

## Beschreibung

Die vorliegende Erfindung betrifft Katalysatorsysteme für die Copolymerisation von Kohlenmonoxid und α-olefinisch ungesättigten Verbindungen, enthaltend als wesentliche Bestandteile
a) einen Metallkomplex der allgemeinen Formel (I) 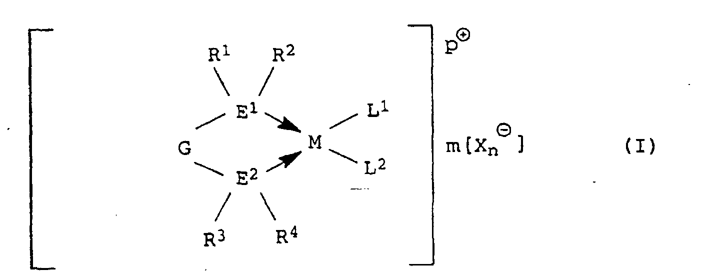 in der die Substituenten und Indizes die folgende Bedeutung haben:
   - G: -(CR^{b}₂)ᵣ-, -(CR^{b}₂)ₛ-Si(R^{a})₂-(CR^{b}₂)ₜ-, -A'-O-B'- oder -A'-Z(R⁵)-B'- mit
   - R⁵: Wasserstoff, unsubstituiertes oder mit funktionellen Gruppen auf der Basis der Elemente der Gruppen IVA, VA, VIA oder VIIA des Periodensystems der Elemente substituiertes C₁- bis C₂₈-Alkyl, C₃- bis C₁₄-Cycloalkyl, C₆bis C₁₅-Aryl oder Alkylaryl mit 1 bis 20 C-Atomen im Alkylrest und 6 bis 15 C-Atomen im Arylrest, -N(R^{b})₂, -Si(R^{c})₃ oder einen Rest der allgemeinen Formel II 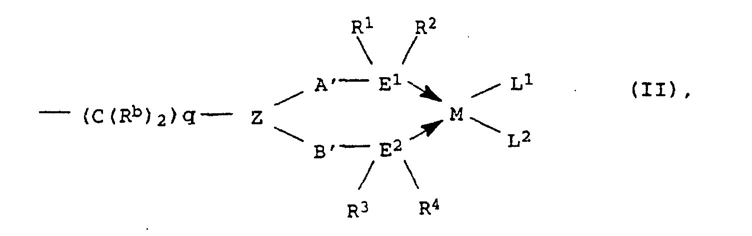
   in der
   - q: eine ganze Zahl von 0 bis 20 bedeutet und die weiteren Substituenten in (II) die gleiche Bedeutung wie in (I) haben,
   - A', B': - (CR^{b}₂)_{r'}-, -(CR^{b}₂)ₛ-Si(R^{a})₂-(CR^{b}₂)ₜ-, -N(R^{b})-, ein r'-, s- oder t-atomiger Bestandteil eines Ringsystems oder zusammen mit Z ein (r'+1)-, (s+1)- oder (t+1)-atomiger Bestandteil eines Heterocyclus,
   - R^{a}: unabhängig voneinander C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
   - R^{b}: wie R^{a} oder Wasserstoff oder Si(R^{c})₃,
   - R^{c}: C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
   - r: 1, 2, 3 oder 4 und
   - r': 1 oder 2,
   - s, t: 0, 1 oder 2, wobei 1 ≤ s+t ≤ 3
   - Z: ein nichtmetallisches Element aus der Gruppe VA des Periodensystems der Elemente,
   - M: ein Metall, ausgewählt aus den Gruppen VIIIB, IB oder IIB des Periodensystems der Elemente,
   - E¹, E²: ein nichtmetallisches Element aus der Gruppe VA des Periodensystems der Elemente,
   - R¹ bis R⁴: mit mindestens einer polaren protonenaktiven oder ionischen funktionellen Gruppe auf der Basis von Elementen der Gruppen IVA bis VIA der Periodensystems der Elemente substituiertes lineares oder verzweigtes C₂- bis C₂₈-Alkyl, C₃- bis C₁₄-Cycloalkyl oder Alkylaryl mit 1 bis 28 C-Atomen im Alkylteil und 6 bis 15 C-Atomen im Arylteil,
   - L¹, L²: formal geladene oder neutrale Liganden,
   - x: formal ein- oder mehrwertige Anionen,
   - p: 0, 1, 2, 3 oder 4,
   - m, n: 0, 1, 2, 3 oder 4,
   wobei p = m x n,
   und
b) gegebenenfalls eine oder mehrere Lewis- oder Protonensäuren oder ein Gemisch von Lewis- und Protonensäuren.

Des weiteren betrifft die Erfindung die Verwendung dieser Katalysatorsysteme für die Herstellung von linearen, alternierenden Copolymeren aus Kohlenmonoxid und α-olefinisch ungesättigten Verbindungen sowie Verfahren zur Herstellung der genannten Copolymere in einem wässrigen Medium.

Übergangsmetallkatalysierte Verfahren zur Herstellung linearer, alternierender Copolymere aus Kohlenmonoxid und α-olefinisch ungesättigten Verbindungen, auch kurz als Kohlenmonoxidcopolymere oder Polyketone bezeichnet, sind bekannt. Beispielsweise wird in der EP-A 0 121 965 ein mit bidentaten Phosphinliganden chelatisierter cis-Palladiumkomplex, [Pd(Ph₂P(CH₂)₃PPh₂)](OAc)₂ (Ph = Phenyl, Ac = Acetyl), eingesetzt. Die Kohlenmonoxidcopolymerisation kann in Suspension, wie in der EP-A 0 305 011 beschrieben, oder in der Gasphase, beispielsweise gemäß EP-A 0 702 045, durchgeführt werden. Häufig eingesetzte Suspensionsmittel sind zum einen niedermolekulare Alkohole, insbesondere Methanol (s.a. EP-A 0 428 228), zum anderen unpolare oder polar aprotische Flüssigkeiten wie Dichlormethan, Toluol oder Tetrahydrofuran (vgl. EP-A 0 460 743 und EP-A 0 590 942). Als gut geeignet für die genannten Polymerisationsverfahren haben sich insbesondere Komplexverbindungen mit Bisphosphinchelatliganden erwiesen, deren Reste am Phosphor Aryl- oder substituierte Arylgruppen darstellen. Besonders häufig werden demgemäß als Chelatliganden 1,3-Bis(diphenylphosphin)propan oder 1,3-Bis[di-(o-methoxyphenyl)phosphin)]propan eingesetzt (s.a. Drent et al., Chem. Rev., 1996, 96, S. 663 - 681). Üblicherweise wird die Kohlenmonoxidcopolymerisation in den genannten Fällen in Gegenwart von Säuren durchgeführt.

Die Kohlenmonoxidcopolymerisation in niedermolekularen Alkoholen wie Methanol ist mit dem Nachteil behaftet, daß das sich bildende Kohlenmonoxidcopolymer eine hohe Aufnahmefähigkeit für diese Flüssigkeiten besitzt und bis zu 80 Vol.-% an z.B. Methanol durch das Kohlenmonoxidcopolymer gebunden bzw. aufgenommen werden. Demzufolge ist ein hoher Energieaufwand erforderlich, um die Kohlenmonoxidcopolymeren zu trocknen und rein zu isolieren. Von Nachteil ist weiterhin, daß selbst nach einem intensiven Trocknungsvorgang immer noch Restmengen an Alkohol im Kohlenmonoxidcopolymerisat verbleiben. Eine Anwendung als Verpackungsmaterial für Lebensmittel scheidet damit für auf diese Art und Weise hergestellte Formmassen von vornherein aus. In der EP-A 0 485 035 wird die Verwendung von Zusätzen an Wasser in Anteilen von 2,5 bis 15 Gew.-% zum alkoholischen Suspensionsmittel vorgeschlagen, um die Restmengen an niedermolekularem Alkohol im Kohlenmonoxidcopolymerisat zu eliminieren. Allerdings führt auch diese Vorgehensweise nicht zu methanolfreien Copolymerisaten. Die Verwendung halogenierter Kohlenwasserstoffe oder Aromaten wie Dichlormethan oder Chlorbenzol bzw. Toluol bringt andererseits Probleme insbesondere bei Handhabung und der Entsorgung mit sich.

Zur Umgehung der mit den genannten Suspensionsmitteln einhergehenden Nachteile wird von Jiang und Sen, Macromolecules, 1994, 27, S. 7215-7216, die Herstellung von linearen, alternierenden Kohlenmonoxidcopolymeren in wässrigen Systemen unter Verwendung eines Katalysatorsystems, bestehend aus [Pd(CH₃CN)₄] (BF₄)₂ und 1,3-Bis[di-(3-benzolsulfonsäure)phosphin]propan als wasserlöslichem Chelatliganden, beschrieben. Allerdings ist die erzielte Katalysatoraktivität sehr gering und für eine großtechnische Darstellung daher ungeeignet.

Verspui et al., Chem. Commun., 1998, S. 401-402, gelingt gegenüber Jiang und Sen die Steigerung der Katalysatoraktivität bei der Copolymerisation von Kohlenmonoxid und Ethen, indem sie den genannten Chelatliganden infolge einer verbesserten Synthesevorschrift (s.a. Hermann et al., Angew. Chem. Int. Ed. Engl., 1995, 34, S. 811 ff) in wesentlich reinerer Form einsetzen. Weiterhin ist die Gegenwart einer Brönsted-Säure erforderlich, um zu gegenüber Jiang und Sen verbesserten Katalysatoraktivitäten zu gelangen. Wenngleich sich mit Hilfe einer verbesserten Synthesevorschrift der Chelatligand 1,3-Bis[di-(3-benzoesulfonsäure)phosphin]propan in reinerer Form darstellen läßt, ist damit jedoch kein Weg aufgezeigt, wie man zu geeigneten Chelatliganden mit anderen Substitutionsmustern gelangen könnte. So sind die beschriebenen wasserlöslichen Übergangsmetallkomplexe ausschließlich auf sulfonierte aromatische Substituenten am Phosphor beschränkt. Die Herstellung dieser Chelatliganden erfordert zudem die Handhabung sehr aggressiver Substanzen wie Borsäure, konzentrierte Schwefelsäure und Oleum. Eine Ausweitung auf andere Systeme ist aufgrund der vorgegebenen Struktur grundsätzlich nicht möglich.

Es wäre daher wünschenswert, auf Katalysatorsysteme für die Copolymerisation von Kohlenmonoxid und α-olefinisch ungesättigten Verbindungen in wässrigen Systemen zurückgreifen zu können, die von vornherein eine große Anzahl unterschiedlicher Substituenten am Chelatliganden zulassen und gleichzeitig eine gleichbleibend gute Reproduzierbarkeit bei hohem Wirkungsgrad ermöglichen.

Der vorliegenden Erfindung lag daher die Aufgabe zugrunde, aktive Katalysatorsysteme für die Herstellung linearer, alternierender Kohlenmonoxidcopolymere zu finden, die für die Copolymerisation in einem wässrigen Medium geeignet sind. Des weiteren lag der Erfindung die Aufgabe zugrunde, Verfahren zur Verfügung zu stellen, die in einem wässrigen Medium in Gegenwart der genannten Katalysatorsysteme lineare, alternierende Kohlenmonoxidcopolymere mit reproduzierbar guter Katalysatoraktivität liefern.

Demgemäß wurden die eingangs definierten Katalysatorsysteme gefunden. Des weiteren wurde deren Verwendung für die Herstellung linearer, alternierender Kohlenmonoxidcopolymere sowie ein Verfahren zur Herstellung dieser Kohlenmonoxidcopolymere gefunden.

Bevorzugte erfindungsgemäße Katalysatorsysteme enthalten als aktive Bestandteile
a) einen Metallkomplex der allgemeinen Formel (Ia) 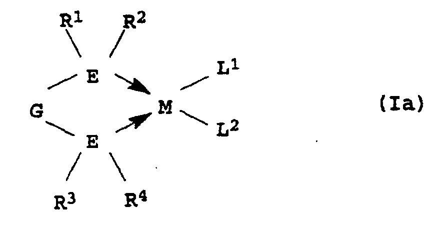 in der die Substituenten und Indizes die folgende Bedeutung haben:
   - G: - (CR^{b}₂)ᵣ- oder -(CR^{b}₂)-N(R⁵)-(CR^{b}₂)-, worin
   - R^{b}: Wasserstoff, C₁- bis C₁₀-Alkyl oder C₆- bis C₁₀-Aryl,
   - r: 1, 2, 3 oder 4,
   - R⁵: Wasserstoff, C₁- bis C₁₀-Alkyl, C₃- bis C₁₀-Cycloalkyl, C₆- bis C₁₅-Aryl, mit funktionellen Gruppen auf Basis der Elemente der Gruppen IVA, VA, VIA, VIIA des Periodensystems der Elemente substituiertes C₁- bis C₁₀-Alkyl, C₃- bis C₁₀-Cycloalkyl oder C₆- bis C₁₅-Aryl,
   - M: Palladium oder Nickel,
   - E¹, E²: Phosphor,
   - R¹ bis R⁴: lineare, verzweigte oder Carbocyclen enthaltende C₂bis C₂₈-Alkyleinheiten oder C₃- bis C₁₄-Cycloalkyleinheiten, die über mindestens eine endständige oder interne Hydroxy-, Amino-, Carbonsäure-, Phosphorsäure-, Ammonium- oder Sulfonsäuregruppe verfügen, oder eine Alkylarylgruppe mit 1 bis 20 C-Atomen im Alkylteil und 6 bis 15 C-Atomen im Arylteil, wobei der Alkyl- oder Arylteil mit mindestens einer Hydroxy-, Carbonsäure-, Aminosäure-, Phosphorsäure-, Ammonium- oder Sulfonsäuregruppe substituiert ist,
   - L¹, L²: Acetat, Trifluoracetat, Tosylat oder Halogenide,
   und
b) Schwefelsäure, p-Toluolsulfonsäure, Tetrafluorborsäure, Trifluormethansulfonsäure, Perchlorsäure oder Trifluoressigsäure als Protonensäure oder Bortrifluorid, Antimonpentafluorid oder Triarylborane als Lewis-Säure.

In einer weiteren Ausführungsform ist ein Katalysatorsystem bevorzugt, in dem der Metallkomplex (I) als Substituenten R¹ bis R4 solche Reste aufweist, die mit mindestens einer freien Carbonsäure- oder Sulfonsäuregruppe substituiertes C₂- bis C₂₈-Alkyl, C₃- bis C₁₄-Cycloalkyl oder Alkylaryl mit 1 bis 28 C-Atomen im Alkylteil und 6 bis 15 C-Atomen im Arylteil darstellen, wobei vollständig auf die Anwesenheit von externen Lewis- oder Protonensäuren b) verzichtet wird.

Grundsätzlich sind als Bestandteil der Übergangsmetallkomplexe (I) bzw. des erfindungsgemäßen Katalysatorsystems bidentate Chelatliganden der allgemeinen Formel (R¹) (R²)E¹-G-E²(R³) (R⁴) (III) geeignet, in der die Substituenten und Indizes die vorgenannte Bedeutung haben.

Die verbrückende Struktureinheit G in den Metallkomplexen (I) bzw. den Chelatliganden (III) des erfindungsgemäßen Katalysatorsystems besteht im allgemeinen aus ein- oder mehratomigen Brükkensegmenten. Unter einer verbrückenden Struktureinheit wird grundsätzlich eine Gruppierung verstanden, die die Elemente El und E² miteinander verbindet. Unter solche Struktureinheiten fallen beispielsweise substituierte oder unsubstituierte Alkylenketten oder solche Alkylenketten, in denen eine Alkyleneinheit durch eine Silylengruppe, eine Amino- oder Phosphinogruppe oder durch einen Ethersauerstoff ersetzt sind.

Unter den einatomig verbrückten Struktureinheiten sind solche mit einem verbrückenden Atom aus der Gruppe IVA des Periodensystems der Elemente wie -C(R^{b})₂- oder -Si(R^{a})₂-, worin R^{a} unabhängig voneinander insbesondere für lineares oder verzweigtes C₁- bis C₁₀-Alkyl, beispielsweise Methyl, Ethyl, i-Propyl oder t-Butyl, C₃- bis C₆-Cycloalkyl, wie Cyclopropyl oder Cyclohexyl, C₆- bis C₁₀-Aryl, wie Phenyl oder Naphthyl, mit funktionellen Gruppen auf der Basis der nichtmetallischen Elemente der Gruppen IVA, VA, VIA oder VIIA des Periodensystems substituiertes C₆- bis C₁₀-Aryl, beispielsweise Tolyl, (Trifluormethyl)phenyl, Dimethylaminophenyl, p-Methoxyphenyl oder partiell oder perhalogeniertes Phenyl, Aralkyl mit 1 bis 6 C-Atomen im Alkylteil und 6 bis 10 C-Atomen im Arylteil, beispielsweise Benzyl, und R^{b} insbesondere für Wasserstoff und daneben für die vorstehend für R^{a} angegebenen Bedeutungen stehen, bevorzugt. R^{a} stellt insbesondere eine Methylgruppe, R^{b} insbesondere Wasserstoff dar.

Unter den mehratomig verbrückten Systemen sind die zwei-, dreiund vieratomig verbrückten Struktureinheiten hervorzuheben, wobei die dreiatomig verbrückten Systeme in der Regel bevorzugt eingesetzt werden.

Geeignete dreiatomig verbrückte Struktureinheiten basieren im allgemeinen auf einer Kette aus Kohlenstoffatomen, also zum Beispiel Propylen (-CH₂CH₂CH₂-), oder auf einer Brückeneinheit mit einem Heteroatom aus der Gruppe IVA, VA oder VIA des Periodensystems der Elemente, wie Silicium, Stickstoff, Phosphor oder Sauerstoff im Kettengerüst.

Die Brückenkohlenstoffatome können im allgemeinen mit C₁- bis C₆-Alkyl wie Methyl, Ethyl oder t-Butyl, C₆- bis C₁₀-Aryl wie Phenyl oder durch funktionelle Gruppen auf Basis der Elemente der Gruppen IVA, VA, VIA oder VIIA der Periodensystems der Elemente, also beispielsweise Triorganosilyl, Dialkylamino, Alkoxy, Hydroxy oder Halogen substituiert sein. Geeignete substituierte Propylenbrücken sind zum Beispiel solche mit einer Methyl-, Phenyl-, Hydroxy-, Trifluormethyl-, m-Hydroxyalkyl- oder Methoxygruppe in 2-Position.

Unter den mehratomig verbrückten Struktureinheiten mit einem Heteroatom im Kettengerüst werden vorteilhaft Verbindungen eingesetzt, in denen Z Stickstoff oder Phosphor, insbesondere Stickstoff bedeutet (s.a. Formel (I)). Der Substituent R⁵ an Z kann insbesondere bedeuten: Wasserstoff, lineares oder verzweigtes C₁bis C₂₈-Alkyl, insbesondere C₁- bis C₂₀-Alkyl wie Methyl, Ethyl, i-Propyl, t-Butyl, n-Hexyl oder n-Dodecyl, C₃- bis C₁₄-Cycloalkyl, insbesondere C₃ bis C₈-Cycloalkyl wie Cyclopropyl oder Cyclohexyl, C₆- bis C₁₅-Aryl, insbesondere C₆- bis C₁₀-Aryl, beispielsweise Phenyl, oder Alkylaryl mit 1 bis 20 C-Atomen im Alkylrest und 6 bis 10 C-Atomen im Arylrest, beispielsweise Benzyl.

Unter die genannten Alkyl- und Arylreste fallen sowohl unsubstituierte wie auch substituierte Verbindungen. Die substituierten Verbindungen können zum Beispiel funktionelle Gruppen auf der Basis der Elemente der Gruppen IVA, VA, VIA oder VIIA des Periodensystems der Elemente enthalten. Geeignet sind u.a. Triorganosilylgruppen wie Trimethylsilyl oder t-Butyldiphenylsilyl, die Carbonsäuregruppe oder Carbonsäurederivate wie Ester oder Amide, primäre, sekundäre oder tertiäre Aminogruppen wie Dimethylamino oder Methylphenylamino, die Nitro- und die Hydroxygruppe, des weiteren Alkoxyreste wie Methoxy oder Ethoxy, die Sulfonatgruppe sowie Halogenidatome wie Fluor, Chlor oder Brom. Aryl bedeutet im Sinne der vorliegenden Erfindung auch substituiertes und unsubstituiertes Heteroaryl, also zum Beispiel Pyridyl oder Pyrrolyl. Unter Alkylreste R⁵ fallen ebenfalls langkettige Alkylengruppen mit 12 bis 22 C-Atomen in der Kette, die auch über polare protonenaktive oder ionische Funktionalitäten wie die Sulfonsäure-, Carbonsäure-, Hydroxy-, Aminosäure- oder Ammoniumgruppe, zum Beispiel in endständiger Position, verfügen können.

Bevorzugt sind als Reste R⁵ auch solche Verbindungen, die einen elektronenziehenden Substituenten darstellen. Geeignet als elektronenziehende Substituenten sind zum Beispiel Alkylgruppen mit einem oder mehreren elektronenziehenden Resten wie Fluor, Chlor, Nitril oder Nitro in α- oder β-Position zu Z. Weiterhin geeignet sind Arylgruppen mit den genannten elektronenziehenden Resten sowie als direkt an Z gebundene Reste, auch die Nitril-, Sulfonat und Nitrogruppe. Als geeignete elektronenziehende Alkylreste seien beispielhaft die Trifluormethyl-, Trichlorethyl-, Difluormethyl-, 2,2,2-Trifluorethyl-, Nitromethyl- und die Cyanomethylgruppe genannt. Als geeignete elektronenziehende Arylreste seien beispielhaft genannt: m-, p-, o-Fluor- oder Chlorphenyl, 2,4-Difluorphenyl, 2,4-Dichlorphenyl, 2,4,6-Trifluorphenyl, 3,5-Bis(tri-fluormethyl)phenyl, Nitrophenyl, 2-Chlor-5-nitrophenyl und 2-Brom-5-nitrophenyl. In diesem Zusammenhang kommen gleichfalls Carbonyleinheiten als Reste R⁵ in Frage, so daß, wenn Z Stickstoff bedeutet, Z und R⁵ eine Carbonsäueamidfunktionalität ausbilden. Als ein solcher geeigneter Rest seien die Acetyl- oder die Trifluoracetylgruppe genannt.

Unter den Resten R⁵ sind insbesondere bevorzugt t-Butyl, Phenyl, p-Fluorphenyl, Trifluormethyl, 2,2,2-Trifluorethyl, Pentafluorphenyl, 3,5-Bis(trifluormethyl)phenyl sowie ortho-, z.B. 3,4-, meta-, z.B. 2,4-, oder para-, z.B. 2,5-Difluorphenyl.

Als Einheiten A' und B' gemäß den Formeln (I) bis (III) kommen C₁bis C₄-Alkyleneinheiten in substituierter oder unsubstituierter Form in Frage, also beispielsweise Methylen, Ethylen, Propylen oder Etyliden, Propyliden sowie Benzyliden. Bevorzugt werden Methylen, Ethylen, Ethyliden oder Benzyliden, besonders bevorzugt Methylen eingesetzt.

A' und B' können ebenfalls ein ein-, zwei-, drei- oder vieratomiger Bestandteil eines aliphatischen oder aromatischen Ringsystems sein. Zum Beispiel können A' und B' eine Methylen- oder Ethyleneinheit eines Cyclopropyl-, Cyclopentyl- oder Cyclohexylrings darstellen. Als Ringsysteme kommen auch aliphatische und aromatische Heterocyclen in Betracht.

A' und B' können des weiteren Bestandteil eines Heterocyclus sein, der aus den Komponenten A'-Z-R⁵ bzw. B'-Z-R⁵ gebildet wird, d.h. A'-Z-R⁵ bzw. B'-Z-R⁵ können z.B. einen substituierten oder unsubstituierten Pyrrolidin- oder Piperidinring ausbilden.

Als chelatisierend wirkende Atome E¹ und E² kommen unabhängig voneinander die nichtmetallischen Elemente der Gruppe VA des Periodensystems der Elemente in Frage, wobei bevorzugt auf Stickstoff und Phosphor, insbesondere Phosphor zurückgegriffen wird. In einer bevorzugten Ausführungsform stellen E¹ und E² in den Verbindungen (I) und (III) Phosphor dar.

In den erfindungsgemäßen Katalysatorsystemen stellen die Reste R¹ bis R⁴ mit mindestens einer polaren protonenaktiven oder ionischen funktionellen Gruppe auf der Basis von Elementen der Gruppen IVA bis VIA der Periodensystems der Elemente substituiertes C₂- bis C₂₈-, vorzugsweise C₃- bis C₂₀-Alkyl, C₃- bis C₁₄-, vorzugsweise C₃- bis C₈-Cycloalkyl oder Alkylaryl mit 1 bis 28, vorzugsweise 3 bis 20 C-Atomen im Alkylteil und 6 bis 15, vorzugsweise 6 bis 10 C-Atomen im Arylteil dar. Vorzugsweise stehen R¹ bis R⁴ für lineare, verzweigte oder Carbocyclen enthaltende C₂- bis C₂₈-Alkyleinheiten oder C₃- bis C₁₄-Cycloalkyleinheiten, die über mindestens eine endständige oder interne Hydroxy-, Carbonsäure-, Phosphorsäure-, Ammonium-, Aminosäure-, Sulfonsäuregruppe verfügen, oder eine Alkylarylgruppe mit 1 bis 28 C-Atomen im Alkylteil und 6 bis 15 C-Atomen im Arylteil, wobei der Alkyl- oder Arylteil mit mindestens einer Hydroxy-, Carbonsäure-, Phosphorsäure-, Ammonium-, Aminosäure-, Sulfonsäuregruppe substituiert ist.

Es können auch die Salze der Carbon-, Phosphor-, Amino- oder Sulfonsäuren eingesetzt werden. Geeignete Salze sind zum Beispiel Alkali- oder Erdalkalisalze wie Natrium-, Kalium- oder Magnesiumcarboxylate oder -sulfonate.

Als Gegenionen für die genannten Ammoniumreste kommen insbesondere nicht-nucleophile Anionen, wie sie auch für die Übergangsmetallkomplexe (I) verwendet werden (siehe Anionen X), in Frage. Besonders geeignet sind zum Beispiel p-Toluolsulfonat, Tetrafluoroborat, Trichloracetat oder Hexafluorophoshat.

Besonders geeignete Alkylreste R¹ bis R⁴ sind beispielsweise Alkyleneinheiten mit einer oder zwei endständigen Hydroxy-, Carbonsäure-, Sulfonsäure- oder -Ammoniumgruppen. Des weiteren können die Reste R¹ bis R⁴ auch mehr als zwei polare Gruppen aufweisen und zum Beispiel über vier oder sechs Hydroxy-, Ammoniumoder Carbonsäuregruppen verfügen. Demgemäß können die Reste R¹ bis R⁴ in einer Chelatverbindung (III) jeweils auch über unterschiedliche funktionelle Gruppen verfügen. Auch können die Reste R¹ bis R⁴ funktionelle Gruppen in voneinander unterschiedlicher Anzahl aufweisen. Als Reste R¹ bis R⁴ kommen zum Beispiel Verbindungen in Frage, die unter die folgende Formel (IV) fallen:

- (CR^{d} ₂)ₖ-(T)₁-(CR^{d} ₂)_{k'}-Y (IV),

in der die Substituenten und Indizes die folgende Bedeutung haben:
- R^{d}: wie R^{b}, oder Y,
- T: C₃- bis C₁₀-Cycloalkylen, insbesondere C₃- bis C₆-Cycloalkylen, oder C₆- bis C₁₅-Arylen, insbesondere C₆- bis C₁₀-Arylen, gegebenenfalls substituiert mit R^{d} oder Y,
- k: 0 bis 20, falls 1 = 0 oder 1 = 1 und T = Cycloalkyl und 1 bis 20, falls 1 = 1 und T = Aryl,
- k': 0 bis 20,
- 1: 0 oder 1 und
- Y: eine polare protonenaktive oder ionische funktionelle Gruppe auf der Basis von Elementen der Gruppen IVA bis VIA des Periodensystems der Elemente.

Als geeignete Reste Y kommen die Hydroxy-, Aminosäure-, Carbonsäure-, Phosphorsäure-, Ammonium- und die Sulfonsäuregruppe in Frage. Unter den Cycloaliphaten T sind die Cyclopentyl- und die Cyclohexylgruppe sowie als Aryl- bzw. Aryleneinheit T der Phenyl(en)rest bevorzugt. Der Index k nimmt in der Regel Werte im Bereich von 2 bis 20, bevorzugt von 3 bis 18 an, k' nimmt bevorzugt Werte im Bereich von 0 bis 10, insbesondere von 1 bis 8 an. Die Herstellung geeigneter propylenverbrückter Chelatligandverbindungen kann beispielsweise ausgehend von dem kommerziell erhältlichen 1,3-Dibrompropan vorgenommen werden. Über eine doppelte Arbuzov-Reaktion, zum Beispiel mit Triethylphosphit, gelangt man zu 1,3-Bisphosphonsäurederivaten, die sich reduktiv, wie in "Methoden der organischen Chemie (Houben-Weyl)", 4. Aufl., Band XII/1, Teil 1, Georg Thieme Verlag, 1963, S. 62, beschrieben, in 1,3-Diphosphinpropan überführen lassen. Als Reduktionsmittel eignen sich z.B. Lithiumaluminiumhydrid oder Diisobutylaluminiumhydrid. 1,3-Diphosphinpropan eröffnet über eine Hydrophosphinierungsreaktion mit funktionalisierten Olefinen einen flexiblen Zugang zu substituierten Bisphosphinen. Die Hydrophosphinierung verläuft im allgemeinen über einen radikalischen Mechanismus und kann thermisch, photochemisch oder mit Hilfe eines Radikalstarters initiiert werden. Für eine thermische Initiierung sind im allgemeinen Temperaturen im Bereich von 20 bis 100°C und Drücke von 0,1 bis 5 bar erforderlich. Als Radikalstarter sind zum Beispiel Di-t-butyl-peroxid oder Azo-bis-[isobuttersäurenitril] geeignet. Zur photochemischen Initiierung reicht in der Regel bereits die UV-Bestrahlung einer Hg-Hochdrucklampe über einen Zeitraum von 2 bis 48 Stunden für eine quantitative Hydrophosphinierung aus. Über radikalisch initiierte Verfahren werden bei der Hydrophosphinierung im allgemeinen Anti-Markovnikov-Produkte erhalten.

Für die Herstellung von Chelatliganden mit Resten R¹ bis R⁴, die Carbonsäuregruppen tragen, hat es sich als vorteilhaft erwiesen, zunächst von olefinisch ungesättigten Verbindungen auszugehen, die mit entsprechenden Carbonsäureestergruppen derivatisiert sind, und diese in der Hydrophosphinierungsreaktion einzusetzen. Anschließend können die freien Carbonsäuren mittels Verseifung nach bekannten Methoden gewonnen werden.

Daneben gelingt die Darstellung geeigneter Chelatligandverbindungen auch unter sauer katalysierten Bedingungen. Die nach diesem Verfahren erhaltenen Produkte fallen infolge der Isomerisierung der olefinischen Doppelbindung unter den sauren Reaktionsbedingungen häufig als Gemisch an. Der Verfahrensschritt der Hydrophosphinierung findet sich z.B. in "Methoden der organischen Chemie (Houben-Weyl)", 4. Aufl., Band XII/1, Teil 1, Georg Thieme Verlag, 1963, S. 25 bis 28, beschrieben.

Im allgemeinen sind für die genannte Hydrophosphinierungsreaktion alle Olefine geeignet, die unter diese Verbindungsklasse fallen, sofern sie über eine polare protonenaktive oder ionische funktionelle Gruppe verfügen. In Frage kommen beispielsweise Propenylreste sowie C₄- bis C₂₈-Alkene mit mindestens einer internen oder endständigen Doppelbindung, die über mindestens eine Hydroxy-, Aminosäure-, Carbonsäure-, Phosphorsäure-, Ammonium- oder Sulfonsäuregruppe verfügen. In Frage kommen ebenfalls olefinische Verbindungen mit aromatischen Resten, wobei die funktionelle Gruppe sowohl am aliphatischen als auch am aromatischen Rest vorliegen kann, also beispielsweise 4-(1-Penten)-benzoesäure oder 3-Phenyl-pent-5-en-carbonsäure. Weiterhin sind olefinische Verbindungen mit aliphatischen Carbocyclen in der Alkylenkette als Substituent geeignet. Des weiteren können auch cyclische Olefine wie Cyclohexen-3-ol oder Cycloocten-4-ol verwendet werden. Selbstverständlich kann auch auf Olefine mit mehreren polaren protonenaktiven oder ionischen funktionellen Gruppen zurückgegriffen werden. Bevorzugt setzt man bei der Hydrophosphinierungsreaktion der α, ω-Bisphosphine geeignete Alkene mit α-olefinischer Doppelbindung ein. Als solche kommen zum Beispiel auch heteroatomhaltige α-Olefine, wie (Meth)acrylsäureester oder - amide sowie Homoallyl- oder Allylalkohole in Betracht.

Besonders bevorzugt wird auf Reste R¹ bis R⁴ zurückgegriffen, bei denen die durch die polaren protonenaktiven oder ionischen funktionellen Gruppen induzierte Hydrophilie ausreicht, den Metallkomplex (I) vollständig wasserlöslich zu machen. Je größer die Anzahl der funktionellen Gruppen an den Resten R¹ bis R⁴ ist, um so größer kann auch der lipophile aliphatische oder aliphatischaromatische Anteil sein. Bevorzugt sind zum Beispiel als Reste R¹ bis R⁴ mit jeweils einer Hydroxygruppe solche mit 2 bis 15 C-Atomen in der Alkyleinheit.

In einer besonders bevorzugten Ausführungsform des Chelatliganden (III) verfügen die Reste R¹ bis R⁴ als Alkylsubstituenten mit einer Hydroxygruppe über 4 bis 12, insbesondere 4 bis 7 C-Atome, als Alkylsubstituenten mit einer Carbonsäuregruppe über 4 bis 15, insbesondere 5 bis 12 C-Atome, als Alkylsubstituenten mit einer Sulfonsäuregruppe über 4 bis 18, insbesondere 5 bis 15 C-Atome sowie als Alkylsubstituenten mit einer Ammoniumgruppe über 4 bis 22, insbesondere 5 bis 20 C-Atome.

Geeignet als Chelatliganden (III) sind beispielsweise
1,3-Bis(di-5-hydroxypentyl)phosphinopropan,
1,3-Bis(di-6-hydroxyhexyl)phosphinopropan,
1,3-Bis(di-7-hydroxyheptyl)phosphinopropan,
1,3-Bis(di-8-hydroxyoctyl)phosphinopropan,
1,3-Bis(di(3-hydroxycyclopentyl)propyl)phosphinopropan,
1,3-Bis[di-5-(sulfonsäure)pentyl]phospinopropan, 1,3-Bis[di-6-(sulfonsäure)hexyl]phosphinopropan,
1,3-Bis[di-7-(sulfonsäure)heptyl]phosphinopropan,
1,3-Bis[di-8-(sulfonsäure)octyl]phosphinopropan,
1,3-bis[di(3-(sulfonsäure)cyclopentyl)propyl]phosphinopropan,
1,3-Bis(di-5-pentansäure)phospinopropan,
1,3-Bis(di-6-hexansäure)phospinopropan,
1,3-Bis(di-7-heptansäure)phosphinopropan,
1,3-Bis(di-8-octansäure)phosphinopropan,
Bis[(di-5-hydroxypentyl)phospinomethyl]phenylamin,
Bis[(di-6-hydroxyhexyl)phosphinomethyl]phenylamin,
Bis[(di-7-hydroxyheptyl)phosphinomethyl]phenylamin,
Bis[(di-8-hydroxyoctyl)phosphinomethyl]phenylamin,
Bis[(di(3-hydroxycyclopentyl)propyl]phenylamin,
Bis[(di-5-(sulfonsäure)pentyl)phosphinomethyl]phenylamin,
Bis[(di-6-(sulfonsäure)hexyl)phospinomethyl]phenylamin,
Bis [(di-7-(sulfonsäure)heptyl)phosphinomethyl]phenylamin,
Bis[(di-8-(sulfonsäure)octyl)phosphinomethyl]phenylamin,
Bis[(di(3-(sulfonsäure)cyclopentyl)propyl)phospinomethyl]phenylamin,
Bis[(di-5-pentansäure)phospinomethyl]phenylamin,
Bis[(di-6-hexansäure)phospinomethyl]phenylamin,
Bis[(di-7-heptansäure)phosphinomethyl]phenylamin und
Bis [(di-8-octansäure)phosphinomethyl]phenylamin.

Besonders bevorzugt unter den genannten Chelatligandverbindungen sind jene, in denen die Reste R¹ bis R⁴ einen mit einer Hydroxyoder Carbonsäuregruppe substituierten Hexyl-, Octyl-, Cyclopentyl- oder Cyclohexylrest darstellen.

Als Metalle M der erfindungsgemäßen Katalysatorsysteme eignen sich die Metalle der Gruppen VIIIB, IB und IIB des Periodensystems der Elemente, also neben Eisen, Cobalt und Nickel vornehmlich die Platinmetalle wie Ruthenium, Rhodium, Osmium, Iridium und Platin sowie ganz besonders bevorzugt Palladium. Die Metalle können in den Komplexen (I) formal ungeladen, formal einfach positiv geladen oder vorzugsweise formal zweifach positiv geladen vorliegen.

Geeignete formal geladene anorganische Liganden L¹, L² sind Hydrid, Halogenide, Sulfate, Phosphate oder Nitrate. Des weiteren sind geeignet Carboxylate oder Salze organischer Sulfonsäuren wie Methylsulfonat, Trifluormethylsulfonat oder p-Toluolsulfonat. Unter den Salzen organischer Sulfonsäuren ist p-Toluolsulfonat bevorzugt. Als formal geladene Liganden L¹, L² sind Carboxylate, bevorzugt C₁- bis C₂₀-Carboxylate und insbesondere C₁- bis C₇-Carboxylate, also z.B. Acetat, Trifluoracetat, Propionat, Oxalat, Citrat oder Benzoat bevorzugt. Besonders bevorzugt ist Acetat.

Geeignete formal geladene organische Liganden L¹, L² sind auch C₁bis C₂₀-aliphatische Reste, C₃- bis C₃₀-cycloaliphatische Reste, C₇- bis C₂₀-Aralkylreste mit C₆- bis C₁₄-Arylresten und C₁- bis C₆-Alkylresten sowie C₆- bis C₂₀-aromatische Reste, beispielsweise Methyl, Ethyl, Propyl, i-Propyl, t-Butyl, n-, i-Pentyl, Cyclohexyl, Benzyl, Phenyl und aliphatisch oder aromatisch substituierte Phenylreste.

Als formal ungeladene Liganden L¹, L² sind generell Lewisbasen geeignet, also Verbindungen mit mindestens einem freien Elektronenpaar. Besonders gut geeignet sind Lewisbasen deren freies Elektronenpaar oder deren freie Elektronenpaare sich an einem Stickstoff- oder Sauerstoffatom befinden, also beispielsweise Nitrile, R-CN, Ketone, Ether, Alkohole oder Wasser. Vorzugsweise verwendet man C₁- bis C₁₀-Nitrile wie Acetonitril, Propionitril, Benzonitril oder C₂- bis C₁₀-Ketone wie Aceton, Acetylaceton oder aber C₂- bis C₁₀-Ether, wie Dimethylether, Diethylether, Tetrahydrofuran. Insbesondere verwendet man Acetonitril, Tetrahydrofuran oder Wasser.

Grundsätzlich können die Liganden L¹ und L² in jeder beliebigen Ligandkombination vorliegen, d.h. der Metallkomplex (I) kann zum Beispiel einen Nitrat- und einen Acetatrest, einen p-Toluolsulfonat- und einen Acetatrest oder einen Nitrat- und einen formal geladenen organischen Liganden wie t-Butyl enthalten. Bevorzugt liegen in den Metallkomplexen L¹ und L² als identische Liganden vor.

Je nach formaler Ladung des das Metall M enthaltenden Komplexfragments enthalten die Metallkomplexe Anionen X. Ist das M-enthaltende Komplexfragment formal ungeladen, so enthält der erfindungsgemäße Komplex (I) kein Anion X. Vorteilhafterweise werden Anionen X eingesetzt, die möglichst wenig nucleophil sind, d.h. eine möglichst geringe Tendenz haben, mit dem Zentralmetall M eine starke Wechselwirkung, ob ionisch, koordinativ oder kovalent, einzugehen.

Geeignete Anionen X sind beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren wie zum Beispiel

Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat. Vorzugsweise verwendet man Perchlorat, Trifluoracetat, Sulfonate wie Methylsulfonat, Trifluormethylsulfonat, p-Toluolsulfonat, Tetrafluoroborat oder Hexafluorophosphat und insbesondere Trifluormethylsulfonat, Trifluoracetat, Perchlorat oder p-Toluolsulfonat.

Als definierte Übergangsmetallkomplexe sind zum Beispiel geeignet:
[1,3-Bis(di-5-hydroxypentyl)phospinopropan]palladium(II)- acetat,
[1,3-Bis(di-6-hydroxyhexyl)phosphino-propan]palladium(II)acetat,
[1,3-Bis(di(3-hydroxycyclopentyl)propyl)phosphinopropan]palladium (II)acetat,
[1,3-Bis(di-8-hydroxyoctyl)phospinopropan]palladium(II)acetat und
[1,3-Bis(di(3-hydroxycyclohexyl)propyl)phospinopropan]palladium(II)acetat.

Die beschriebenen Übergangsmetallkomplexe sind zumindest in geringen Teilen in Wasser löslich. In der Regel sind diese Metallkomplexe gut bis sehr gut in Wasser löslich.

Definierte Übergangsmetallkomplexe (I) können nach folgenden Verfahren hergestellt werden.

Die Herstellung erfolgt für die neutralen Chelatkomplexe (p = 0) durch Austausch von schwach koordinierenden Liganden, wie zum Beispiel 1,5-Cyclooctadien, Benzonitril oder Tetramethylethylendiamin, die an die entsprechenden Übergangsmetallverbindungen, beispielsweise Übergangsmetall-Halogenide, Übergangsmetall-(Alkyl)(Halogenide), Übergangsmetall-Diorganyle, gebunden sind, gegen die erfindungsgemäßen Chelatliganden der allgemeinen Formel (III) in der vorhergehend beschriebenen Bedeutung.

Die Reaktion wird im allgemeinen in einem polaren Lösungsmittel, wie beispielsweise Acetonitril, Aceton, Ethanol, Diethylether, Dichlormethan oder Tetrahydrofuran oder deren Gemischen bei Temperaturen im Bereich von -78 bis +60°C durchgeführt.

Des weiteren können neutrale Metallkomplexe (I), in denen L¹ und L² Carboxylat, z.B. Acetat, bedeuten, durch Umsetzung von Übergangsmetallsalzen wie beispielsweise Pd(OAc)₂ mit den beschriebenen Chelatliganden (III) in Acetonitril, Aceton, Ethanol, Diethylether, Dichlormethan, Tetrahydrofuran oder Wasser bei Raumtemperatur hergestellt werden. Auch Lösungsmittelgemische können dabei verwendet werden.

Als weitere Synthesemethode kommt die Umsetzung der Chelatkomplexe der allgemeinen Formel (I) mit Organometallverbindungen der Gruppen IA, IIA, IVA und IIB in Frage, beispielsweise C₁- bis C₆-Alkyle der Metalle Lithium, Aluminium, Magnesium, Zinn, Zink, wobei formal geladene anorganische Liganden L¹, L^{2,} wie vorher definiert, gegen formal geladene aliphatische, cycloaliphatische oder aromatische Liganden L¹, L^{2,} wie ebenfalls vorher definiert, ausgetauscht werden. Die Reaktion wird im allgemeinen in einem Lösungsmittel wie beispielsweise Diethylether oder Tetrahydrofuran bei Temperaturen im Bereich von -78 bis 65°C durchgeführt.

Monokationische Komplexe der allgemeinen Formel (I) (p=1) können zum Beispiel durch Umsetzung von (Chelatligand) Metall (Acetat)(Organo)- oder (Chelatligand) Metall (Halogeno)(Organo)-Komplexen mit stöchiometrischen Mengen eines Metallsalzes M'X erhalten werden. Die Umsetzungen werden im allgemeinen in koordinierenden Lösungsmitteln wie beispielsweise Acetonitril, Benzonitril oder Tetrahydrofuran bei Temperaturen im Bereich von -78 bis 65°C durchgeführt.

Es ist vorteilhaft, wenn die Metallsalze M'X folgende Kriterien erfüllen. Das Metall M' soll vorzugsweise schwer lösliche Metallchloride bilden, wie zum Beispiel Silberchlorid. Das Salz-Anion soll vorzugsweise ein nicht-nucleophiles Anion X, wie vorher definiert, sein.

Gut geeignete Salze für die Bildung von kationischen Komplexen sind Silbertetrafluoroborat, Silberhexafluorophosphat, Silbertrifluormethansulfonat, Silberperchlorat, Silberparatoluolsulfonat, Silbertrifluoracetat und Silbertrichloracetat.

Die dikationischen Komplexe (p = 2) werden analog den monokationischen Komplexen hergestellt, nur daß jetzt anstatt der (Chelatligand)Metall(Acetat)(Organo)- oder der (Chelatligand)Metall(Halogeno)(Organo)-Komplexe die (Chelatligand)Metall(diacetat)-bzw. (Chelatligand)Metall(di-Halogeno)-Komplexe als Vorstufe eingesetzt werden.

Als weiteres Verfahren zur Herstellung der dikationischen Komplexe (I) kommt die Umsetzung von [Q₄M]X₂ mit den eingangs definierten Chelatliganden der allgemeinen Formel (III) in Frage. Hierbei bedeutet Q gleiche oder unterschiedliche schwache Liganden wie beispielsweise Acetonitril, Benzonitril oder 1,5-Cyclooctadien, M und X haben die vorher definierte Bedeutung.

Ein bevorzugtes Verfahren zur Herstellung der Metallkomplexe der allgemeinen Formel (I) ist die Umsetzung der Dihalogenmetallvorläuferkomplexe mit Silbersalzen enthaltend nicht-koordinierende Anionen.

Die Copolymerisation von Kohlenmonoxid und α-olefinisch ungesättigten Verbindungen in Gegenwart der erfindungsgemäßen Katalysatorsysteme wird in einem wässrigen Medium vorgenommen. Das Polymerisationsgemisch wird zur Erlangung reproduzierbar guter Produktivitäten vorzugsweise kräftig durchgemischt. Hierfür kann auf geeignete Rührwerkzeuge wie Anker- oder Wendelrührer zurückgegriffen werden. Geeignete Rührgeschwindigkeiten liegen im Bereich von 250 bis 1100 Upm, vorzugsweise oberhalb 290 Upm.

Die Kohlenmonoxidcopolymere können prinzipiell nach zwei unterschiedlichen Verfahrensweisen gewonnen werden. Nach dem einen Herstellungsverfahren kommen die vorgenannten definierten Übergangsmetallkomplexe (I) zum Einsatz. Diese Komplexe werden separat hergestellt und als solche zum Reaktionsgemisch gegeben bzw. im Reaktionsbehältnis vorgelegt. In einem weiteren Herstellungsverfahren werden die die katalytisch aktive Spezies bildenden Bestandteile einzeln zum Reationsgemisch gegeben. Bei dieser in-situ Generierung des Katalysators wird im allgemeinen das Metall M in Salzform oder als Komplexsalz dem Reaktionsgefäß zugeführt. Des weiteren werden die Chelatligandverbindung (III) sowie gegebenenfalls eine Aktivatorverbindung zugesetzt. Die Zugabe des Aktivatorspezies kann entfallen, wenn der Chelatligand (III) über Reste R¹ bis R⁴ verfügt, die mindestens eine freie Sulfon- oder Carbonsäuregruppe aufweisen.

In der Regel gehen mit der Verwendung definierter Metallkomplexe (I) höhere Produktivitäten als mit dem in-situ-Verfahren einher. Als olefinisch ungesättigte Monomerverbindungen kommen bei den genannten Verfahren zur Herstellung der Kohlenmonoxidcopolymeren sowohl reine Kohlenwasserstoffverbindungen als auch heteroatomhaltige α-Olefine, wie (Meth)acrylsäureester oder -amide sowie Homoallyl- oder Allylalkohole, -ether oder -halogenide in Betracht. Unter den reinen Kohlenwasserstoffen sind C₂- bis C₂₀-1-Alkene geeignet. Unter diesen sind die niedermolekularen α-Olefine, z.B. α-Olefine mit 2 bis 8 C-Atomen wie Ethen, Propen, 1-Buten, 1-Penten, 1-Hexen oder 1-Octen hervorzuheben. Selbstverständlich können auch cyclische Olefine, z.B. Cyclopenten, aromatische Olefinverbindungen wie Styrol oder α-Methylstyrol oder Vinylester wie Vinylacetat eingesetzt werden. Besonders bevorzugt werden Ethen oder Propen, insbesondere Ethen, oder Mischungen von Ethen mit niedermolekularen α-Olefinen, wie Propen oder 1-Buten, verwendet.

Das molare Verhältnis von Kohlenmonoxid zu α-Olefin oder zu einem Gemisch an α-Olefinen bewegt sich in der Regel im Bereich von 5:1 bis 1:5, üblicherweise werden Werte im Bereich von 2:1 bis 1:2 benutzt.

Die Copolymerisationstemperatur wird im allgemeinen in einem Bereich von 0 bis 200°C eingestellt, wobei bevorzugt bei Temperaturen im Bereich von 20 bis 130°C copolymerisiert wird. Der Druck liegt im allgemeinen im Bereich von 2 bis 300 bar und insbesondere im Bereich von 20 bis 220 bar.

Zur Katalysatoraktivierung kann auf geeignete Aktivatorverbindungen zurückgegriffen werden. Als Aktivatorverbindungen kommen sowohl mineralische Protonensäuren als auch Lewis-Säuren in Frage. Geeignet als Protonensäuren sind zum Beispiel Schwefelsäure, Salpetersäure, Borsäure, Tetrafluorborsäure, Perchlorsäure, p-Toluolsulfonsäure, Trifluoressigsäure, Trifluormethansulfonsäure oder Methansulfonsäure. Bevorzugt wird auf p-Toluolsulfonsäure und Tetrafluorborsäure zurückgegriffen.

Als Lewis-Säuren kommen beispielsweise Borverbindungen wie Triphenylboran, Tris(pentafluorphenyl)boran, Tris(p-chlorphenyl)boran oder Tris(3,5-bis-(trifluormethyl)phenyl)boran oder Aluminium-, Zink-, Antimon- oder Titanverbindungen mit lewissaurem Charakter in Frage. Es können auch Mischungen von Protonensäuren bzw. Lewis-Säuren sowie Protonen- und Lewis-Säuren im Gemisch eingesetzt werden.

Das molare Verhältnis von Aktivator zu Metallkomplex (I), bezogen auf die Menge an Metall M, liegt im allgemeinen im Bereich 60:1 bis 1:1, bevorzugt von 25:1 bis 2:1 und besonders bevorzugt von 12:1 bis 3:1 für die Fälle, in denen die funktionellen Gruppen der Reste R¹ bis R⁴ keine Sulfon- oder Carbonsäurefunktionalitäten sind. Selbstverständlich kann auch bei Metallkomplexen mit Chelatliganden, die die vorgenannten funktionellen Säuregruppen tragen, Aktivatorverbindung b) zum Polymerisationsgemisch gegeben werden.

Die Kohlenmonoxidcopolymerisation kann sowohl diskontinuierlich, z.B. in Rührautoklaven, als auch kontinuierlich, z.B. in Rohrreaktoren, Schlaufenreaktoren oder Rührkesselkaskaden durchgeführt werden.

In den erfindungsgemäßen Polymerisationsverfahren im wässrigen Medium werden mittlere Katalysatorproduktivitäten erhalten, die im allgemeinen größer 0,5 kg Polymer/g (Metall)/h sind. Es können auch reproduzierbar Produktivitäten größer 0,7 kg Polymer/g (Metall)/h erzielt werden.

Mit Hilfe der erfindungsgemäßen Katalysatorsysteme wird der Einsatz halogenierter oder aromatischer Kohlenwasserstoffe vermieden. Außerdem entfallen aufwendige Trennoperationen. Die erfindungsgemäßen Verfahren eröffnen demzufolge einen ökonomischen und präparativ einfachen Zugang zu linearen, alternierenden Kohlenmonoxidcopolymeren. Schließlich verfügen die nach den erfindungsgemäßen Verfahren erhältlichen Katalysatoren auch nach mehreren Stunden Reaktionszeit über eine gleichbleibend hohe mittlere Katalysatoraktivität.

Die vorliegende Erfindung wird anhand der nachfolgenden Beispiele näher erläutert.

### Beispiele

### I) Darstellung der Chelatligandverbindungen

### Allgemeine Vorgehensweise

i) Herstellung von 1,3-Bis(di-ethylphosphonit)propan
   Zu 1,3-Dibrompropan (102,5 ml) gab man Triethylphosphit (696 ml) und erwärmte langsam auf 140°C. Das sich bildende Bromethan wurde destillativ entfernt. Nach Abschwächung der Bromethanfreisetzung wurde die Reaktionstemperatur auf 155°C erhöht und die Reaktion für 24 h bei dieser Temperatur gehalten. Es wurde weiteres Triethylphosphit (696 ml) zugetropft und die Reaktion nach weiteren 24 h durch destillative Abtrennung überschüssigen Triethylphosphits abgebrochen. Monosubstituiertes Produkt wurde destillativ bei 150°C im Hochvakuum entfernt. Der verbleibende Destillationsrückstand stellte 1,3-Bis(di-ethylphosphonit)propan dar. Ausbeute: 86 %.
ii) Herstellung von 1,3-Diphosphinopropan
   Eine Lösung von 1,3-Bis(di-ethylphosphonit)propan (103,3 g) in absolutiertem Diethylether (100 ml) wurde langsam bei 0°C zu einer Suspension von LiAlH₄ (25 g) in Diethylether (200 ml) gegeben. Nach Beendigung der Zugabe wurde die Reaktionstemperatur auf Raumtemperatur gebracht und die Reaktion für 16 h bei dieser Temperatur gerührt. Zur Hydrolyse überschüssigen LiAlH₄ wurde entgaste und mit Argon gesättigte 6 molare Salzsäure langsam zugegeben. Die abgetrennte organische Phase wurde über Natriumsulfat getrocknet. Die wässrige Phase wurde mit Diethylether durchmischt, die Diethyletherphase nach Phasentrennung über Natriumsulfat getrocknet und mit der vorgenannten organischen Phase vereinigt. 1,3-Diphosphinpropan konnte bei 140°C unter Normaldruck destillativ gewonnen werden. Ausbeute: 61 %.
iii)Herstellung wasserlöslicher Chelatligandverbindungen
   Bis(di-7-hydroxyheptyl)phosphinopropan, 1,3-Diphosphinpropan (1,08 g) und 6-Hepten-1-ol (44 mmol), das mehrfach entgast und mit Argon gesättigt wurde, wurden in einem Quarzschlenkrohr für 24 h dem UV-Licht einer Hg-Hochdrucklampe ausgesetzt. Bei höheren Olefinen wurde das Reaktionsgefäß zusätzlich erwärmt, um die Viskosität des Reaktionsgemisches zu vermindern. Durch destillative Abtrennung der überschüssigen Olefinkomponente wurde die gewünschte Chelatligandverbindung annähernd quantitativ erhalten.

Bis(di-5-hydroxypentyl)-, Bis(di-6-hydroxyhexyl)-, Bis(di-8-hydroxyoctyl)- und Bis(di(3-hydroxycyclopentyl)propyl)phosphinopropan wurden analog der vorgenannten Vorschrift erhalten.

Die Ausgangsverbindungen 1-Pentenol, 1-Hexenol und 3-Hydroxy-3-cylopentyl-propen wurden wie folgt erhalten:

4-Penten-1-ol wurde mittels LiAlH₄-Reduktion aus 4-Pentensäure, kommerziell erhältlich über die Fa. Aldrich, hergestellt. Analog wurden 6-Hepten- und 7-Oktensäure in 6-Hepten-1-ol bzw. 7-Okten-1-ol überführt.

5-Hexen-1-ol wurde von der Fa. Fluka bezogen und ohne weitere Aufreinigung eingesetzt.

3-Hydroxy-3-cyclopentylpropen wurde aus Allylmagnesiumchlorid und Cyclopentan über eine Grignard-Reaktion hergestellt.

### II) Darstellung definierter Übergangsmetallkomplexe

i) Darstellung von [1,3-Bis(di-5-hydroxypentyl)phosphinopropan]palladium(II)acetat
   0,9 g 1,3-Bis(di-5-hydroxypentyl)phophinopropan wurden in 10 ml mehrfach entgastem und mit Argon gesättigtem Ethanol gelöst und langsam zu einer Lösung von Palladium(II)acetat (0,44 g in 15 ml entgastem, mit Argon gesättigtem Acetonitril) getropft. Zur Vervollständigung der Reaktion wurde bei Raumtemperatur noch 20 Min gerührt. Das Lösemittelgemisch wurde im Vakuum entfernt und der definierte Pd-Komplex als braungelbes, hochviskoses Öl isoliert.
ii) Darstellung von [1,3-Bis(di-6-hydroxyhexyl)phosphinopropan]palladium(II)-acetat
   Die Reaktion wurde analog II) i) durchgeführt. Als Chelatligand wurde 1,3-Bis(di-6-hydroxyhexyl)phosphinopropan eingesetzt.
iii) Darstellung von [1,3-Bis(di(3-hydroxycyclopentyl)propyl)phosphinopropan] palladium(II)acetat
   Zu einer Lösung von 0,25 g Palladium(II)acetat in 20 ml Acetonitril tropfte man bei Raumtemperatur eine Mischung von 1,3-Bis(di(3-hydroxycyclopentyl)propyl)phosphinopropan in 20 ml Dichlormethan. Nach Rühren bei Raumtemperatur für 16 h wurde das Lösemittelgemisch im Vakuum entfernt. Der gewünschte Pd-Komplex wurde als roter Feststoff isoliert.
III)Copolymerisation von Kohlenmonoxid und Ethen
   In einen 300 ml-Autoklaven gab man destilliertes Wasser (100 ml), die gewünschte Menge an [1,3 Bis(di-6-hydroxyhexyl)phosphinopropan]palladium(II)-acetat sowie p-Toluolsulfonsäure (fünffache molare Menge, bezogen auf die eingesetzte Katalysatormenge). Das Reaktionsgefäß wurde zunächst evakuiert und mit Stickstoff geflutet. Die Stickstoffatmosphäre wurde durch ein Kohlenmonoxid/Ethen-Gemisch (1:1) verdrängt und die Polymerisation bei dem gewünschten Druck und der gewünschten Temperatur über einen vorgewählten Zeitraum bei einer Rührergeschwindigkeit von 300 Upm vorgenommen. Die Reaktionsbedingungen wurden während der Polymerisation konstant gehalten. Durch Abkühlen und Entspannen des Reaktionsgefäßes wurde die Reaktion abgebrochen. Das über Filtration abgetrennte Copolymer wurde mit Methanol (500 ml) und Aceton (200 ml) gewaschen und bei 80°C über einen Zeitraum von 5 h im Hochvakuum getrocknet.

Angaben zu den Copolymerisationsparametern und -ergebnissen sind der nachfolgenden Tabelle 1 zu entnehmen:

| Vers. | Kat.-Menge [mmol] | Dauer [h] | Druck [bar] | Temp. [°C] | Aktivität [kg(PK)^{a)}/ g(Pd)/h] | Viskosität: VZ^{b)} [ml/g] |
|---|---|---|---|---|---|---|
| 1 | 0,009 | 5 | 80 | 80 | 0,542 | 170 |
| 2 | 0,017 | 5 | 80 | 60 | 0,366 | 667 |
| 3^{c)} | 0,01 | 5 | 80 | 80 | 0,013 | n.b.^{d)} |
| 4 | 0,01 | 1 | 60 | 90 | 0,761 | n.b.^{d)} |

| | | | | | | |
|---|---|---|---|---|---|---|
| a) PK = Kohlenmonoxid/Ethen-Copolymer | | | | | | |
| b) Bestimmt in einer 0,5 Gew.-%igen o-Dichlorbenzol/Phenol (1 : 1)-Lösung mit Hilfe eines Kapillarviskosimeters. | | | | | | |
| c) Vergleichsversuch: als Katalysator wurde [1,3-Bis(diphenylphosphino)propan]palladium(II)acetat verwendet. | | | | | | |
| d) n.b. = nicht bestimmt | | | | | | |

## Patentansprüche

1. Katalysatorsysteme für die Copolymerisation von Kohlenmonoxid und α-olefinisch ungesättigten Verbindungen, enthaltend als wesentliche Bestandteile
a) einen Metallkomplex der allgemeinen Formel (I) 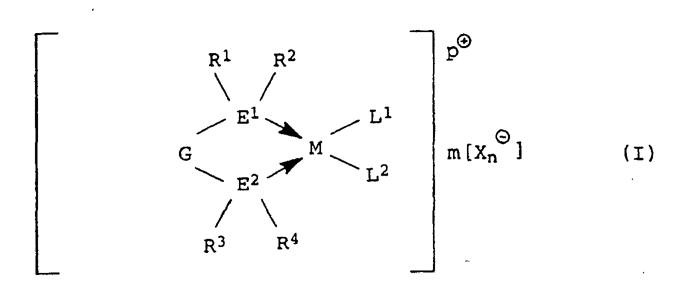 in der die Substituenten und Indizes die folgende Bedeutung haben:
G -(CR^{b}₂)ᵣ-, -(CR^{b}₂)ₛ-Si(R^{a})₂-(CR^{b}₂)ₜ-, -A'-O-B'- oder - A'-Z(R⁵)-B'- mit
R⁵ Wasserstoff, unsubstituiertes oder mit funktionellen Gruppen auf der Basis der Elemente der Gruppen IVA, VA, VIA oder VIIA des Periodensystems der Elemente substituiertes C₁- bis C₂₈-Alkyl, C₃- bis C₁₄-Cycloalkyl, C₆- bis C₁₅-Aryl oder Alkylaryl mit 1 bis 20 C-Atomen im Alkylrest und 6 bis 15 C-Atomen im Arylrest, -N(R^{b})₂, -Si(R^{c})₃ oder einen Rest der allgemeinen Formel II 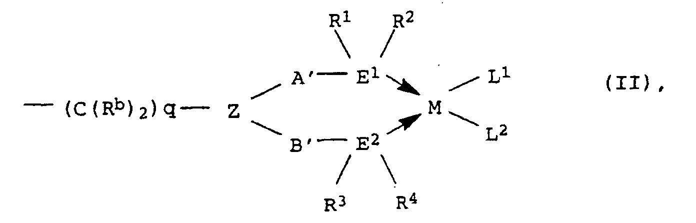
in der
q eine ganze Zahl von 0 bis 20 bedeutet und die weiteren Substituenten in (II) die gleiche Bedeutung wie in (I) haben,
A', B' -(CR^{b}₂)_{r'}-, -(CR^{b}₂)ₛ-Si(R^{a})₂-(CR^{b}₂)ₜ-, -N(R^{b})-, ein r'-, s- oder t-atomiger Bestandteil eines Ringsystems oder zusammen mit Z ein (r'+1)-, (s+1)-oder (t+1)-atomiger Bestandteil eines Heterocyclus,
R^{a} unabhängig voneinander C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
R^{b} wie R^{a} oder Wasserstoff oder Si(R^{c})₃,
R^{c} C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
r 1, 2, 3 oder 4 und
r' 1 oder 2,
s, t 0, 1 oder 2, wobei 1 ≤ s+t ≤ 3
Z ein nichtmetallisches Element aus der Gruppe VA des Periodensystems der Elemente,
M ein Metall, ausgewählt aus den Gruppen VIIIB, IB oder IIB des Periodensystems der Elemente,
E¹, E² ein nichtmetallisches Element aus der Gruppe VA des Periodensystems der Elemente,
R¹ bis R⁴ mit mindestens einer polaren protonenaktiven oder ionischen funktionellen Gruppe auf der Basis von Elementen der Gruppen IVA bis VIA der Periodensystems der Elemente substituiertes lineares oder verzweigtes C₂- bis C₂₈-Alkyl, C₃- bis C₁₄-Cycloalkyl oder Alkylaryl mit 1 bis 28 C-Atomen im Alkylteil und 6 bis 15 C-Atomen im Arylteil,
L¹, L² formal geladene oder neutrale Liganden,
X formal ein- oder mehrwertige Anionen,
p 0, 1, 2, 3 oder 4,
m, n 0, 1, 2, 3 oder 4,
wobei p = m x n,
und
b) gegebenenfalls eine oder mehrere Lewis- oder Protonensäuren oder ein Gemisch von Lewis- und Protonensäuren.

2. Katalysatorsysteme nach Anspruch 1, **dadurch gekennzeichnet, daß** die Reste R¹ bis R⁴ lineare, verzweigte oder Carbocyclen enthaltende C₂- bis C₂₈-Alkyleinheiten oder C₃- bis C₁₄-Cycloalkyleinheiten, die über mindestens eine endständige oder interne Hydroxy-, Aminosäure-, Carbonsäure-, Phosphorsäure-, Ammonium- oder Sulfonsäuregruppe verfügen, oder eine Alkylarylgruppe mit 1 bis 28 C-Atomen im Alkylteil und 6 bis 15 C-Atomen im Arylteil, wobei der Alkyl- oder Arylteil mit mindestens einer Hydroxy-, Aminosäure-, Carbonsäure-, Phosphorsäure-, Ammonium- oder Sulfonsäuregruppe substituiert ist, bedeuten.

3. Katalysatorsysteme nach den Ansprüchen 1 oder 2, **dadurch gekennzeichnet, daß** man als Lewis-Säuren Bortrifluorid, Antimonpentafluorid oder Triarylborane und als Protonensäuren Schwefelsäure, p-Toluolsulfonsäure, Tetrafluorborsäure, Trifluormethansulfonsäure, Perchlorsäure oder Trifluoressigsäure verwendet.

4. Katalysatorsysteme für die Copolymerisation von Kohlenmonoxid und α-olefinisch ungesättigten Verbindungen nach Anspruch 1, enthaltend als wesentlichen Bestandteil einen Metallkomplex der allgemeinen Formel (I) 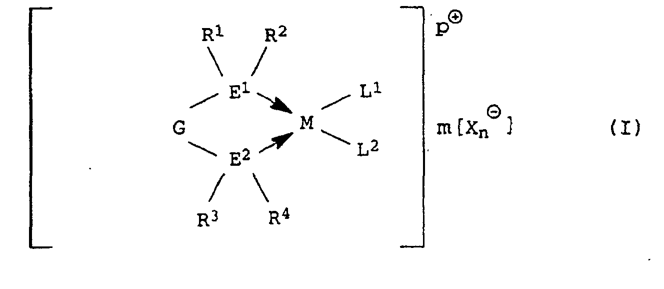 in der die Substituenten und Indizes die folgende Bedeutung haben:
G -(CR^{b}₂)ᵣ-, -(CR^{b}₂)ₛ-Si(R^{a})₂-(CR^{b}₂)ₜ-, -A'-O-B'- oder -A'-Z(R⁵)-B'- mit
R⁵ Wasserstoff, unsubstituiertes oder mit funktionellen Gruppen auf der Basis der Elemente der Gruppen IVA, VA, VIA oder VIIA des Periodensystems der Elemente substituiertes C₁- bis C₂₈-Alkyl, C₃- bis C₁₀-Cycloalkyl, C₆- bis C₁₅-Aryl oder Alkylaryl mit 1 bis 20 C-Atomen im Alkylrest und 6 bis 15 C-Atomen im Arylrest, -N(R^{b})₂, -Si(R^{c})₃ oder einen Rest der allgemeinen Formel II 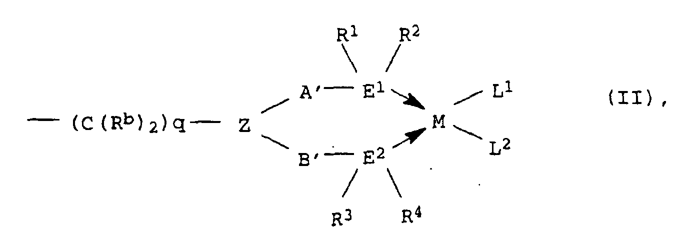
in der
q eine ganze Zahl von 0 bis 20 bedeutet und die weiteren Substituenten in (II) die gleiche Bedeutung wie in (I) haben,
A', B' - (CR^{b}₂)_{r'}- oder -(CR^{b}₂)ₛ-Si(R^{a})₂-(CR^{b}₂)ₜ- oder -N(R^{b})-, ein r'-, s- oder t-atomiger Bestandteil eines Ringsystems oder zusammen mit Z ein (r'+1)-, (s+1)- oder (t+1)-atomiger Bestandteil eines Heterocyclus,
R^{a} unabhängig voneinander C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
R^{b} wie R^{a}, oder Wasserstoff oder Si(R^{c})₃,
R^{c} C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
r 1, 2, 3 oder 4 und
r' 1 oder 2,
s, t 0, 1 oder 2, wobei 1 ≤ s+t ≤ 3
Z ein nichtmetallisches Element aus der Gruppe VA des Periodensystems der Elemente,
M ein Metall ausgewählt aus den Gruppen VIIIB, IB oder IIB des Periodensystems der Elemente,
E¹, E² ein nichtmetallisches Element aus der Gruppe VA des Periodensystems der Elemente,
R¹ bis R⁴ mit mindestens einer freien Carbonsäure- oder Sulfonsäuregruppe substituiertes C₂- bis C₂₈-Alkyl, C₃- bis C₁₄-Cycloalkyl oder Alkylaryl mit 1 bis 28 C-Atomen im Alkylteil und 6 bis 15 C-Atomen im Arylteil,
L¹, L² formal geladene oder neutrale Liganden,
X formal ein- oder mehrwertige Anionen,
p 0, 1, 2, 3 oder 4,
m, n 0, 1, 2, 3 oder 4,
wobei p = m x n,
und keine externe Protonen- oder Lewissäure b).

5. Verwendung der Katalysatorsysteme gemäß den Ansprüchen 1 bis 4 für die Herstellung von linearen, alternierenden Copolymeren aus Kohlenmonoxid und α-olefinisch ungesättigten Verbindungen in einem wässrigen Medium.

6. Verfahren zur Herstellung von linearen, alternierenden Copolymeren aus Kohlenmonoxid und α-olefinisch ungesättigten Verbindungen, **dadurch gekennzeichnet, daß** man die Copolymerisation in einem wässrigen Medium in Gegenwart eines Katalysatorsystems gemäß den Ansprüchen 1 bis 4 durchführt.

7. Verfahren zur Herstellung von linearen, alternierenden Copolymeren aus Kohlenmonoxid und α-olefinisch ungesättigten Verbindungen, **dadurch gekennzeichnet, daß** man die Monomeren in einem wässrigen Medium in Gegenwart
i) eines Metalls M, ausgewählt aus der Gruppe VIIIB, IB oder IIB des Periodensystems der Elemente, das in Salzform oder als Komplexsalz vorliegt,
ii) eines Chelatliganden der allgemeinen Formel (III) (R¹) (R²)E¹-G-E²(R³) (R⁴), in welcher die Substituenten und Indizes die folgende Bedeutung haben:
G - (CR^{b}₂)ᵣ-, -(CR^{b}₂)ₛ-Si(R^{a})₂-(CR^{b}₂)ₜ-, -A'-O-B'- oder - A'-Z(R⁵)-B'- mit
R⁵ Wasserstoff, unsubstituiertes oder mit funktionellen Gruppen auf der Basis der Elemente der Gruppen IVA, VA, VIA oder VIIA des Periodensystems der Elemente substituiertes C₁- bis C₂₈-Alkyl, C₃- bis C₁₄-Cycloalkyl, C₆- bis C₁₅-Aryl oder Alkylaryl mit 1 bis 20 C-Atomen im Alkylrest und 6 bis 15 C-Atomen im Arylrest, -N(R^{b})₂, -Si(R^{c})₃ oder einen Rest der allgemeinen Formel IIa) 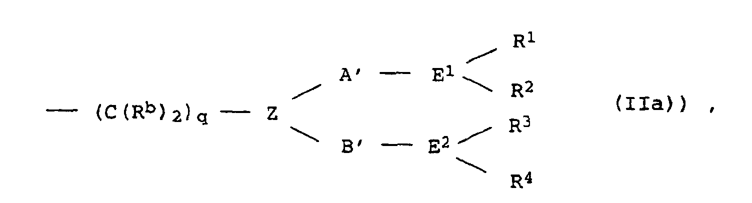
in der
q eine ganze Zahl von 0 bis 20 bedeutet und die weiteren Substituenten in (IIa)) die gleiche Bedeutung wie in (III) haben,
A', B' - (CR^{b}₂)_{r'}- oder -(CR^{b}₂)ₛ-Si(R^{a})₂-(CR^{b}₂)ₜ- oder -N(R^{b})-, ein r'-, s- oder t-atomiger Bestandteil eines Ringsystems oder zusammen mit Z ein (r'+1)-, (s+1)- oder (t+1)-atomiger Bestandteil eines Heterocyclus,
R^{a} unabhängig voneinander C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
R^{b} wie R^{a} oder Wasserstoff oder Si(R^{c})₃,
R^{c} C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
r 1, 2, 3 oder 4 und
r' 1 oder 2,
s, t 0, 1 oder 2, wobei 1 ≤ s+t ≤ 3
Z ein nichtmetallisches Element aus der Gruppe VA des Periodensystems der Elemente,
E¹, E² ein nichtmetallisches Element aus der Gruppe VA des Periodensystems der Elemente und
R¹ bis R⁴ mit mindestens einer polaren protonenaktiven oder ionischen funktionellen Gruppe auf der Basis von Elementen der Gruppen IVA bis VIA der Periodensystems der Elemente substituiertes lineares oder verzweigtes C₂- bis C₂₈-Alkyl, C₃- bis C₁₄-Cycloalkyl oder Alkylaryl mit 1 bis 28 C-Atomen im Alkylteil und 6 bis 15 C-Atomen im Arylteil,
und
iii) gegebenenfalls einer oder mehrerer Lewis- oder Protonensäuren oder eines Gemisches von Lewis- und Protonensäuren
copolymerisiert.

## Claims

1. A catalyst system for the copolymerization of carbon monoxide and α-olefinically unsaturated compounds, containing, as essential components,
a) a metal complex of the formula (I) 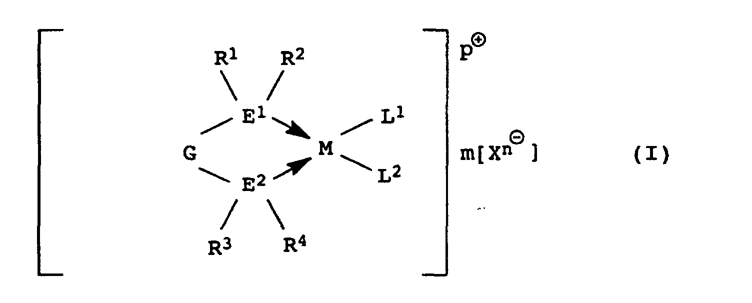 where
G is -(CR^{b}₂)ᵣ-, -(CR^{b}₂)ₛ-Si(R^{a})₂-(CR^{b}₂)ₜ-, -A'-O-B'- or -A'-Z(R⁵)-B'-
R⁵ is hydrogen, or is C₁- to C₂₈-alkyl, C₃- to C₁₄-cycloalkyl, C₆- to C₁₅-aryl or alkylaryl where the alkyl radical is of 1 to 20 carbon atoms and the aryl radical is of 6 to 15 carbon atoms, each of which is unsubstituted or substituted by functional groups based on the elements of groups IVA, VA, VIA or VIIA of the Periodic Table of Elements, or is -N(R^{b})₂, -Si(R^{c})₃ or a radical of the formula II 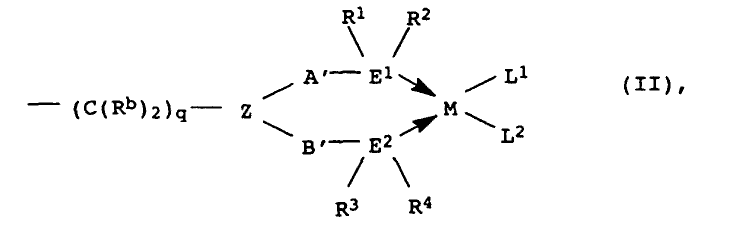
where
q is an integer from 0 to 20 and the further substituents in (II) have the same meanings as in (I),
A'and B' are each -(CR^{b}₂)_{r'}-, -(CR^{b}₂)ₛ-Si(R^{a})₂-(CR^{b}₂)ₜ-, - N(R^{b})-, an r'-, s- or t-atom component of a ring system or, together with Z, an (r'+1)-, (s+1)- or (t+1)-atom component of a heterocyclic structure,
R^{a} independently of one another, are each C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms,
R^{b} is the same as R^{a} or is hydrogen or Si(R^{c})₃,
R^{c} is C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms,
r is 1, 2, 3 or 4
r' is 1 or 2,
s and t are each 0, 1 or 2, where 1 s s+t s 3
Z is a nonmetallic element from group VA of the Periodic Table of Elements,
M is a metal selected from the group VIIIB, IB or IIB of the Periodic Table of Elements,
E¹ and E² are each a nonmetallic element from group VA of the Periodic Table of Elements,
R¹ to R⁴ are each linear or branched C₂- to C₂₈-alkyl, C₃- to C₁₄-cycloalkyl or alkylaryl where the alkyl moiety is of 1 to 28 carbon atoms and the aryl moiety is of 6 to 15 carbon atoms, each of which is substituted by at least one polar protic or ionic functional group based on elements of groups IVA to VIA of the Periodic Table of Elements,
L¹ and L² are formally charged or neutral ligands,
x are formally monovalent or polyvalent anions,
p is 0, 1, 2, 3 or 4,
m and n are each 0, 1, 2, 3 or 4,
and p = m x n,
and
b) if required, one or more Lewis or protic acids or a mixture of Lewis and protic acids.

2. A catalyst system as claimed in claim 1, wherein R¹ to R⁴ are linear, branched or carbocycle-containing C₂- to C₂₈-alkyl units or C₃- to C₁₄-cycloalkyl units which have at least one terminal or internal hydroxyl, amino acid, carboxyl, phosphoric acid, ammonium or sulfo group, or alkylaryl where the alkyl moiety is of 1 to 28 carbon atoms and the aryl moiety is of 6 to 15 carbon atoms, the alkyl or aryl moiety being substituted by at least one hydroxyl, amino acid, carboxyl, phosphoric acid, ammonium or sulfo group.

3. A catalyst system as claimed in claim 1 or 2, wherein the Lewis acid used is boron trifluoride, antimony pentafluoride or a triarylborane and the protic acid used is sulfuric acid, p-toluenesulfonic acid, tetrafluoroboric acid, trifluoromethanesulfonic acid, perchloric acid or

4. A catalyst system for the copolymerization of carbon monoxide and α-olefinically unsaturated compounds as claimed in claim 1, containing, as an essential component, a metal complex of the formula (I) 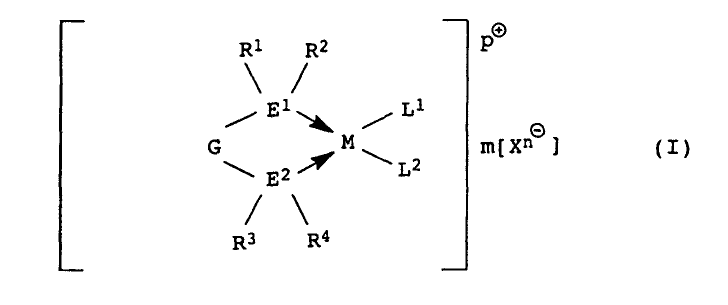 where
G is -(CR^{b}₂)ᵣ-, -(CR^{b}₂)ₛ-Si(R^{a})₂-(CR^{b}₂)ₜ-, -A'-O-B'- or - A'-Z(R⁵)-B'-,
R⁵ is hydrogen or is C₁- to C₂₈-alkyl, C₃- to C₁₀-cycloalkyl, C₆- to C₁₅-aryl or alkylaryl where the alkyl radical is of 1 to 20 carbon atoms and the aryl radical is of 6 to 15 carbon atoms, each of which is unsubstituted or substituted by functional groups based on the elements of groups IVA, VA, VIA or VIIA of the Periodic Table of Elements, or is -N(R^{b})₂, -Si(R^{c})₃ or a radical of the formula Formel II 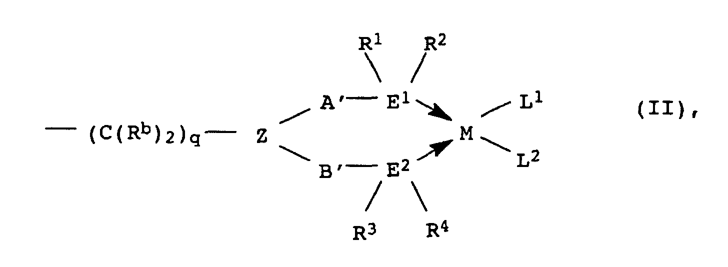
where
q is an integer from 0 to 20 and the further substituents in (II) have the same meanings as in
A' and B' are each -(CR^{b}₂)_{r'}- or -(CR^{b}₂)ₛ-Si(R^{a})₂-(CR^{b}₂)ₜ- or -N(R^{b})-, an r'-, s- or t-atom component of a ring system or, together with Z, an (r'+1)-, (s+1)- or (t+1)-atom component of a heterocyclic structure,
R^{a} independently of one another, are each C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms,
R^{b} is the same as R^{a} or is hydrogen or Si(R^{c})₃,
R^{c} is C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms,
r is 1, 2, 3 or 4 and
r' 1 or 2,
s and t are each 0, 1 or 2, where 1 ≤ s+t ≤ 3
Z is a nonmetallic element from group VA of the Periodic Table of Elements,
M is a metal selected from the group VIIIB, IB or IIB of the Periodic Table of Elements,
E¹ and E² are each a nonmetallic element from group VA of the Periodic Table of Elements,
R¹ to R⁴ are each linear or branched C₂- to C₂₈-alkyl, C₃- to C₁₄-cycloalkyl or alkylaryl where the alkyl moiety is of 1 to 28 carbon atoms and the aryl moiety is of 6 to 15 carbon atoms, each of which is substituted by at least one polar protic or ionic functional group based on elements of groups IVA to VIA of the Periodic Table of Elements,
L¹ and L² are formally charged or neutral ligands,
x are formally monovalent or polyvalent anions,
p is 0, 1, 2, 3 or 4,
m and n are each 0, 1, 2, 3 or 4,
and p = m x n,
and no external protic or Lewis acid b).

5. The use of a catalyst system as claimed in any of claims 1 to 4 for the preparation of linear, alternating copolymers of carbon monoxide and α-olefinically unsaturated compounds in an aqueous medium.

6. A process for the preparation of linear, alternating copolymers of carbon monoxide and α-olefinically unsaturated compounds, wherein the copolymerization is carried out in an aqueous medium in the presence of a catalyst system as claimed in claims 1 to 4.

7. A process for the preparation of linear, alternating copolymers of carbon monoxide and α-olefinically unsaturated compounds, wherein the monomers are copolymerized in an aqueous medium in the presence
i) of a metal M selected from the group VIIIB, IB or IIB of the Periodic Table of Elements, which is present in salt form or as a complex salt,
ii) a chelate ligand of the formula (III) (R¹)(R²)E¹-G-E²(R³)(R⁴), where
G is -(CR^{b}₂)ᵣ-, -(CR^{b}₂)ₛ-Si(R^{a})₂-(CR^{b}₂)ₜ-, -A'-O-B'- or -A'-Z(R⁵)-B'-,
R⁵ is hydrogen or is C₁- to C₂₈-alkyl, C₃- to C₁₄-cycloalkyl, C₆- to C₁₅-aryl or alkylaryl where the alkyl radical is of 1 to 20 carbon atoms and the aryl radical is of 6 to 15 carbon atoms, each of which is unsubstituted or substituted by functional groups based on the elements of groups IVA, VA, VIA or VIIA of the Periodic Table of Elements, or is -N(R^{b})₂, -Si(R^{c})₃ or a radical of the formula IIa) 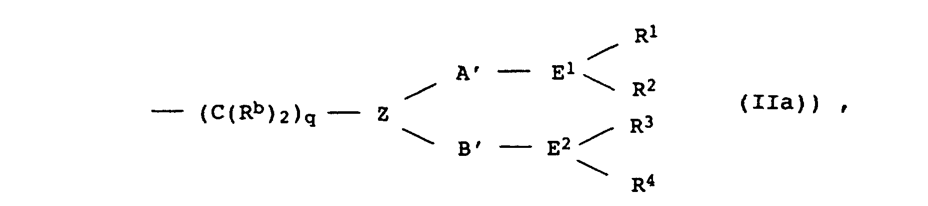
where
q is an integer from 0 to 20 and the further substituents in (IIa)) have the same meanings as in (III),
A'and B' are each -(CR^{b}₂)_{r'}-, -(CR^{b}₂)ₛ-Si(R^{a})₂-(CR^{b}₂)ₜ-, - N(R^{b})-, an r'-, s- or t-atom component of a ring system or, together with Z, an (r'+1)-, (s+1)- or (t+1)-atom component of a heterocyclic structure,
R^{a} independently of one another, are each C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms,
R^{b} is the same as R^{a} or is hydrogen or Si(R^{c})₃,
R^{c} is C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms,
r is 1, 2, 3 or 4,
r' is 1 or 2,
s and t are each 0, 1 or 2, where 1 ≤ s+t ≤ 3
Z is a nonmetallic element from group VA of the Periodic Table of Elements,
E¹ and E² are each a nonmetallic element from group VA of the Periodic Table of Elements, and
R¹ to R⁴ are each linear or branched C₂- to C₂₈-alkyl, C₃- to C₁₄-cycloalkyl or alkylaryl where the alkyl moiety is of 1 to 28 carbon atoms and the aryl moiety is of 6 to 15 carbon atoms, each of which is substituted by at least one polar protic or ionic functional group based on elements of groups IVA to VIA of the Periodic Table of Elements,
and
iii) if required, one or more Lewis or protic acids or a mixture of Lewis and protic acids.

## Revendications

1. Systèmes de catalyseurs pour la copolymérisation de monoxyde de carbone et de composés à insaturation α-oléfinique contenant, en tant que composants principaux
a) un complexe métallique de formule générale (I) 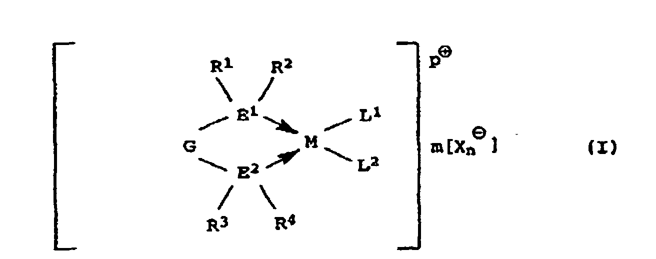 dans laquelle les substituants et les indices ont la signification suivante
G représente un groupe -(CR^{b}₂)ᵣ-, -(CR^{b}₂)ₛ-Si(R^{a})₂-(CR^{b}₂)ₜ-, -A'-O-B'- ou -A'-Z(R⁵)-B'- où
R⁵ représente un atome d'hydrogène, un groupe alkyle en C₁ à C₂₈ non substitué ou substitué par des groupes fonctionnels à base des éléments des groupes IVA, VA, VIA ou VIIA de la Classification Périodique des Eléments, un groupe cycloalkyle en C₃ à C₁₄, aryle en C₆ à C₁₅ ou alkylaryle possédant 1 à 20 atomes de C dans le groupe alkyle et 6 à 15 atomes de C dans le groupe aryle, -N(R^{b})₂, -Si(R^{c})₃ ou un groupe de formule générale II 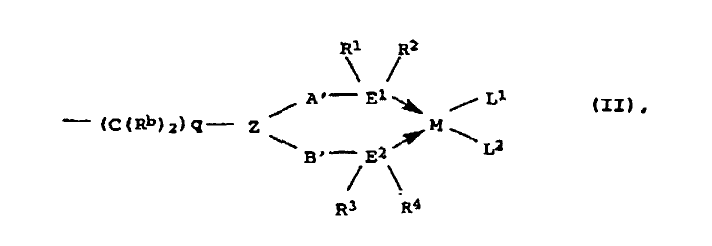
dans laquelle
q représente un nombre entier de 0 à 20 et les autres substituants dans (II) ont la même signification que dans (I),
A', B' représentent -(CR^{b}₂)_{r'}-, -(CR^{b}₂)ₛ-Si(R^{a})₂-(CR^{b}₂)ₜ-, -N(R^{b})-, un composant r'-, s- ou t-atomique d'un système cyclique ou, conjointement avec Z, un composant (r'+1)-, (s+1)- ou (t+1)-atomique d'un hétérocycle,
les R^{a} représentent, indépendamment les uns des autres, un groupe alkyle en C₁ à C₂₀, cycloalkyle en C₃ à C₁₀, aryle en C₆ à C₁₅ ou alkylaryle possédant 1 à 10 atomes de C dans la fraction alkyle et 6 à 15 atomes de C dans la fraction aryle,
les R^{b} ont la même signification que R^{a} ou représentent un atome d'hydrogène ou un groupe Si(R^{c})3,
les R^{c} représentent un groupe alkyle en C₁ à C₂₀, cycloalkyle en C₃ à C₁₀, aryle en C₆ à C₁₅ ou alkylaryle possédant 1 à 10 atomes de C dans la fraction alkyle et 6 à 15 atomes de C dans la fraction aryle,
r vaut 1, 2, 3 ou 4 et
r' vaut 1 ou 2,
s, t valent 0, 1 ou 2, où 1 ≤ s+t ≤ 3
Z représente un élément non métallique du groupe VA de la Classification Périodique des Eléments,
M représente un métal des groupes VIIIB, IB ou IIB de la Classification Périodique des Eléments,
E¹, E² représentent un élément non métallique du groupe VA de la Classification Périodique des Eléments,
R¹ à R⁴ représentent un groupe alkyle en C₂ à C₂₈ linéaire ou ramifié, substitué par au moins un groupe fonctionnel polaire proton-actif ou ionique à base d'éléments des groupes IVA à VIA de la Classification Périodique des Eléments, un groupe cycloalkyle en C₃ à C₁₄ ou alkylaryle possédant 1 à 28 atomes de C dans la fraction alkyle et 6 à 15 atomes de C dans la fraction aryle,
L¹, L² représentent des ligands à charge formelle ou neutre,
X représente des anions mono- ou pluri-valents à charge formelle
p vaut 0, 1, 2, 3 ou 4,
m, n valent 0, 1, 2, 3 ou 4,
où p = m x n,
et
b) éventuellement un ou plusieurs acides de Lewis
ou acides protoniques ou un mélange d'acides de Lewis et d'acides protoniques.

2. Systèmes de catalyseur selon la revendication 1, **caractérisés en ce que** les groupes R¹ à R⁴ représentent des motifs alkyle en C₂ à C₂₈ ou cycloalkyle en C₃ à C₁₄ linéaires ou ramifiés ou contenant des cycles carbone, qui contiennent au moins un groupe hydroxy, acide aminé, acide carboxylique, acide phosphorique, ammonium ou acide sulfonique, ou un groupe alkylaryle possédant 1 à 28 atomes de C dans la fraction alkyle et 6 à 15 atomes de C dans la fraction aryle, la fraction alkyle ou aryle étant substituée par au moins un groupe hydroxy, acide aminé, acide carboxylique, acide phosphorique, ammonium ou acide sulfonique.

3. Systèmes de catalyseurs selon les revendications 1 ou 2, **caractérisés en ce que** l'on utilise, en tant qu'acides de Lewis, le trifluorure de bore, le pentafluorure d'antimoine ou des triarylboranes et, en tant qu'acides protoniques, l'acide sulfurique, l'acide p-toluènesulfonique, l'acide tétrafluoroborique, l'acide trifluorométhanesulfonique, l'acide perchlorique ou l'acide trifluoroacétique.

4. Systèmes de catalyseurs pour la copolymérisation de monoxyde de carbone et de composés à insaturation α-oléfinique selon la revendication 1, contenant, en tant que composant principal, un complexe métallique de formule générale (I) 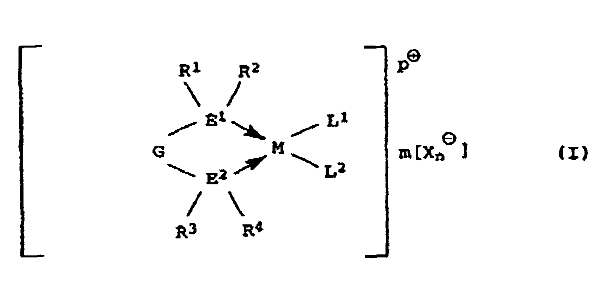 dans laquelle les substituants et les indices ont la signification suivante
G représente un groupe -(CR^{b}₂)ᵣ-, -(CR^{b}₂)ₛ-Si(R^{a})₂-(CR^{b}₂)ₜ-, -A'-O-B'- ou -A'-Z(R⁵)-B'- où
R⁵ représente un atome d'hydrogène, un groupe alkyle en C₁ à C₂₈ non substitué ou substitué par des groupes fonctionnels à base des éléments des groupes IVA, VA, VIA ou VIIA de la Classification Périodique des Eléments, un groupe cycloalkyle en C₃ à C₁₀, aryle en C₆ à C₁₅ ou alkylaryle possédant 1 à 20 atomes de C dans le groupe alkyle et 6 à 15 atomes de C dans le groupe aryle, -N(R^{b})₂, -Si(R^{c})₃ ou un groupe de formule générale II 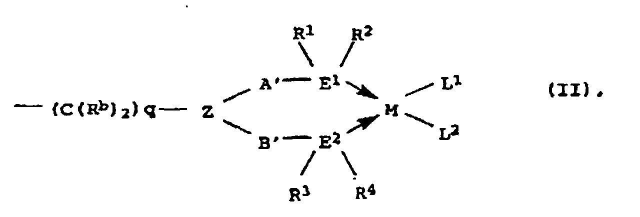
dans laquelle
q représente un nombre entier de 0 à 20 et les autres substituants dans (II) ont la même signification que dans (I),
A', B' représentent -(CR^{b}₂)_{r'}- ou -(CR^{b}₂)ₛ-Si(R^{a})₂-(CR^{b}₂)ₜ- ou -N(R^{b})-, un composant r'-, s- ou t-atomique d'un système cyclique ou, conjointement avec Z, un composant (r'+1)-, (s+1)- ou (t+1)-atomique d'un hétérocycle,
les R^{a} représentent, indépendamment les uns des autres, un groupe alkyle en C₁ à C₂₀, cycloalkyle en C₃ à C₁₀, aryle en C₆ à C₁₅ ou alkylaryle possédant 1 à 10 atomes de C dans la fraction alkyle et 6 à 15 atomes de C dans la fraction aryle,
les R^{b} ont la même signification que R^{a} ou représentent un atome d'hydrogène ou un groupe Si(R^{c})3,
les R^{c} représentent un groupe alkyle en C₁ à C₂₀, cycloalkyle en C₃ à C₁₀, aryle en C₆ à C₁₅ ou alkylaryle possédant 1 à 10 atomes de C dans la fraction alkyle et 6 à 15 atomes de C dans la fraction aryle,
r vaut 1, 2, 3 ou 4 et
r' vaut 1 ou 2,
s, t valent 0, 1 ou 2, où 1 ≤ s+t ≤ 3
z représente un élément non métallique du groupe VA de la Classification Périodique des Eléments,
M représente un métal des groupes VIIIB, IB ou IIB de la Classification Périodique des Eléments,
E¹, E² représentent un élément non métallique du groupe VA de la Classification Périodique des Eléments,
R¹ à R⁴ représentent un groupe alkyle en C₂ à C₂₈ substitué par au moins un groupe acide carboxylique ou acide sulfonique libre, un groupe cycloalkyle en C₃ à C₁₄ ou alkylaryle possédant 1 à 28 atomes de C dans la fraction alkyle et 6 à 15 atomes de C dans la fraction aryle,
L¹, L² représentent des ligands à charge formelle ou neutre,
x représente des anions mono- ou pluri-valents à charge formelle,
p vaut 0, 1, 2, 3 ou 4,
m, n valent 0, 1, 2, 3 ou 4,
où p = m x n,
et aucun acide protonique ou acide de Lewis externe b) .

5. Utilisation des systèmes de catalyseur selon les revendications 1 à 4 pour la préparation de copolymères linéaires alternés à partir de monoxyde de carbone et de composés à insaturation α-oléfinique dans un milieu aqueux.

6. Procédé de préparation de copolymères linéaires alternés à partir de monoxyde de carbone et de composés à insaturation α-oléfinique, **caractérisé en ce que** l'on réalise la copolymérisation dans un milieu aqueux en présence d'un système de catalyseur selon les revendications 1 à 4.

7. Procédé de préparation de copolymères linéaires alternés à partir de monoxyde de carbone et de composés à insaturation α-oléfinique, **caractérisé en ce que** l'on copolymérise les monomères dans un milieu aqueux en présence
i) d'un métal M, choisi dans le groupe VIIIb, IB ou IIB de la Classification Périodique des Eléments, qui est présent sous forme de sel ou de sel complexe,
ii) d'un ligand chélate de formule générale (III) (R¹)(R²)E¹-G-E²(R³)(R⁴), dans laquelle les substituants et les indices ont la signification suivante :
G -(CR^{b}₂)ᵣ-, -(CR^{b}₂)ₛ-Si(R^{a})₂-(CR^{b}₂)ₜ-, -A'-O-B'- ou -A'-Z(R⁵)-B'- où
R⁵ représente un atome d'hydrogène, un groupe alkyle en C₁ à C₂₈ non substitué ou substitué par des groupes fonctionnels à base des éléments des groupes IVA, VA, VIA ou VIIA de la Classification Périodique des Eléments, un groupe cycloalkyle en C₃ à C₁₄, aryle en C₆ à C₁₅ ou alkylaryle possédant 1 à 20 atomes de C dans le groupe alkyle et 6 à 15 atomes de C dans le groupe aryle, -N(R^{b})₂, -Si(R^{c})₃ ou un groupe de formule générale IIa) 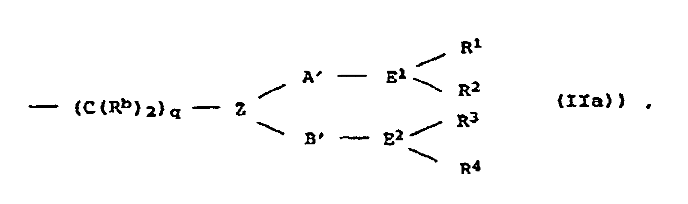
dans laquelle
q représente un nombre entier de 0 à 20 et les autres substituants dans (IIa)) ont la même signification que dans (III),
A', B' représentent -(CR^{b}₂)_{r'}- ou -(CR^{b}₂)ₛ-Si(R^{a})₂-(CR^{b}₂)ₜ- ou -N(R^{b})-, un composant r'-, s- ou t-atomique d'un système cyclique ou, conjointement avec Z, un composant (r'+1)-, (s+1)- ou (t+1)-atomique d'un hétérocycle,
les R^{a} représentent, indépendamment les uns des autres, un groupe alkyle en C₁ à C₂₀, cycloalkyle en C₃ à C₁₀, aryle en C₆ à C₁₅ ou alkylaryle possédant 1 à 10 atomes de C dans la fraction alkyle et 6 à 15 atomes de C dans la fraction aryle,
les R^{b} ont la même signification que R^{a} ou représentent un atome d'hydrogène ou un groupe Si(R^{c})3,
les R^{c} représentent un groupe alkyle en C₁ à C₂₀, cycloalkyle en C₃ à C₁₀, aryle en C₆ à C₁₅ ou alkylaryle possédant 1 à 10 atomes de C dans la fraction alkyle et 6 à 15 atomes de C dans la fraction aryle,
r vaut 1, 2, 3 ou 4 et
r' vaut 1 ou 2,
s, t valent 0, 1 ou 2, où 1 ≤ s+t ≤ 3
Z représente un élément non métallique du groupe VA de la Classification Périodique des Eléments,
E¹, E² représentent un élément non métallique du groupe VA de la Classification Périodique des Eléments et
R¹ à R⁴ représentent un groupe alkyle en C₂ à C₂₈ linéaire ou ramifié, substitué par au moins un groupe fonctionnel polaire proton-actif ou ionique à base d'éléments des groupes IVA à VIA de la Classification Périodique des Eléments, un groupe cycloalkyle en C₃ à C₁₄ ou alkylaryle possédant 1 à 28 atomes de C dans la fraction alkyle et 6 à 15 atomes de C dans la fraction aryle,
et
iii) éventuellement d'un ou de plusieurs acides de Lewis ou acides protoniques ou d'un mélange d'acides de Lewis et d'acides protoniques.
